(19) Europäisches Patentamt
European Patent Office
Office européen des brevets

(11) EP 2 284 844 A1

(12) # EUROPEAN PATENT APPLICATION

published in accordance with Art. 153(4) EPC

(43) Date of publication:
**16.02.2011 Bulletin 2011/07**

(21) Application number: **09758442.9**

(22) Date of filing: **01.06.2009**

(51) Int Cl.:
***H01B 1/06*** *(2006.01)*
***C08G 61/12*** *(2006.01)*
***H01M 4/86*** *(2006.01)*
***H01M 8/02*** *(2006.01)*
***H01M 8/10*** *(2006.01)*

(86) International application number:
**PCT/JP2009/060406**

(87) International publication number:
**WO 2009/148175 (10.12.2009 Gazette 2009/50)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **05.06.2008 JP 2008147848**

(71) Applicant: **Sumitomo Chemical Company, Limited**
**Tokyo 104-8260 (JP)**

(72) Inventors:
- **YAMADA, Takashi**
  **Tsukuba-shi**
  **Ibaraki 305-0045 (JP)**
- **HASEGAWA, Hirohiko**
  **Niihama-shi**
  **Ehime 792-0025 (JP)**

(74) Representative: **Vossius & Partner**
**Siebertstrasse 4**
**81675 München (DE)**

(54) **POLYMER ELECTROLYTE, CROSSLINKED POLYMER ELECTROLYTE, POLYMER ELECTROLYTE MEMBRANE AND USE OF THE SAME**

(57) The present invention provides a polymer electrolyte, a crosslinked polymer electrolyte, a polymer electrolyte membrane and use of the same. The polymer electrolyte has a repeating unit represented by the following formula (1) in its molecule and an ion-exchange group in the molecule:

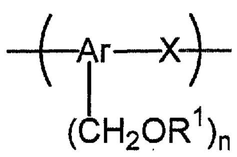

(1)

wherein Ar represents an optionally substituted aromatic group; $R^1$ represents a hydrogen atom or an organic group; X represents a direct bond or a divalent group; n represents an integer of 1 to 3; and when n is 2 or more, the plurality of $R^1$'s may be the same as or different from each other.

EP 2 284 844 A1

## Description

TECHNICAL FIELD

The present invention relates to a polymer electrolyte, a crosslinked polymer electrolyte, a polymer electrolyte membrane and use of the same.

BACKGROUND ART

Polymer electrolytes are used for polymer electrolyte membranes of solid polymer fuel cells. Solid polymer fuel cells (hereinafter sometimes briefly called "fuel cells") are widely expected to be one of the next generation energies in fields such as the electric appliance industry or the automotive industry. Among these cells, direct methanol-type fuel cells (hereinafter sometimes abbreviated as "DMFC") which use methanol as a fuel have attracted attention for use in power sources of, for example, personal computers or mobile devices, since they can be reduced in size.
In DMFC, aqueous methanol solution as a fuel is supplied to a fuel electrode. At this time, it is electrochemically oxidized to generate protons and electrons. The protons move toward an air electrode to which oxygen is supplied through a polymer electrolyte membrane. On the other hand, the electrons produced in the fuel electrode flow to the air electrode through a load connected to a battery, and oxygen, protons and electrons react together to generate water in the air electrode. Thus, polymer electrolyte membranes are required to be membranes having excellent proton conductivity. In addition, if a polymer electrolyte membrane located between a fuel electrode and an air electrode has a low barrier property to methanol (methanol barrier property), there will occur a methanol crossover phenomenon (hereinafter, referred to as "MCO") where the methanol permeates the polymer electrolyte membrane and moves to the air electrode. There is a problem that if this MCO occurs, power generation performance will deteriorate or methanol will leak from the air electrode and the battery itself will be damaged. Therefore, a polymer electrolyte membrane to be used in a direct methanol type fuel cell has been required to be a membrane having an excellent methanol barrier property.
As a polymer electrolyte membrane to be used in a solid polymer fuel cell, a perfluoro-containing polymer electrolyte membrane represented by Nafion (registered trademark of DuPont) has been mainly used. Further, the development of hydrocarbon-containing polymer electrolyte membranes having high performance has been being activated recently and the application of hydrocarbon-containing crosslinked polymer electrolyte membranes improved in the methanol barrier property is being studied. For example, there is proposed a crosslinked polymer electrolyte membrane formed of a polymer electrolyte crosslinked through the desulfation condensation of sulfonic acid groups in a polymer electrolyte membrane (for example, JP-2000-501223-T).

DISCLOSURE OF INVENTION

Generally, the methanol barrier property and proton conductivity were opposing properties. The above-mentioned perfluoro-containing polymer electrolyte membranes are relatively good in proton conductivity, but they were not sufficient in terms of the methanol barrier property. Further, the above-mentioned crosslinked polymer electrolyte membranes are good in the methanol barrier property, but it was insufficient in proton conductivity. Therefore, polymer electrolyte membranes having both a high proton conductivity and methanol barrier property have been desired.
An object of the present invention is to provide a polymer electrolyte and a crosslinked polymer electrolyte which can be applied to a polymer electrolyte membrane having both a high proton conductivity and a methanol barrier property, a polymer electrolyte membrane and applications thereof.
The present inventors have accomplished the present invention as the result of intensive study for attaining the aforementioned object.
That is to say, the present invention provides a polymer electrolyte of the following <1> to <5>.

<1> A polymer electrolyte having a repeating unit represented by the following formula (1) in its molecule and an ion-exchange group in the molecule:

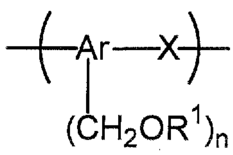 (1)

wherein Ar represents an optionally substituted aromatic group; $R^1$ represents a hydrogen atom or an organic group;

X represents a direct bond or a divalent group; n represents an integer of 1 to 3; and when n is 2 or more, the plurality of $R^1$'s may be the same as or different from each other.

<2> The polymer electrolyte according to <1>, wherein the repeating unit represented by formula (1) is a repeating unit represented by the following formula (2):

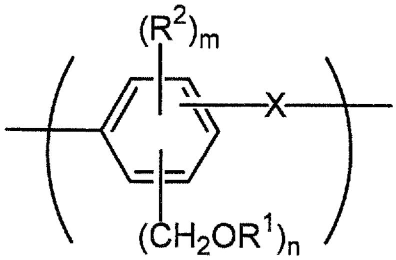

(2)

wherein $R^1$, X, and n have the same definitions as those described above; $R^2$ represents a fluorine atom, an alkyl group having 1 to 20 carbon atoms, an alkoxy group having 1 to 20 carbon atoms, an aryl group having 6 to 20 carbon atoms, an aryloxy group having 6 to 20 carbon atoms, an acyl group having 2 to 20 carbon atoms or an ion-exchange group; m represents an integer of 0 to 3, the sum of n and m being 4 or less; and when m is 2 or more, the plurality of $R^2$'s may be the same as or different from each other.

<3> The polymer electrolyte according to <1> or <2>, wherein the polymer electrolyte is a polymer electrolyte that has 0.1 to 20% by mass of the repeating unit represented by formula (1).

<4> The polymer electrolyte according to any one of <1> to <3>, comprising a repeating unit represented by formula (1), a repeating unit having an ion-exchange group, and a repeating unit having no ion-exchange groups.

<5> The polymer electrolyte according to <4>, wherein the arrangement of the repeating unit represented by formula (1), the repeating unit having an ion-exchange group and the repeating unit having no ion-exchange groups is random.

Further, the present invention provides a polymer electrolyte of the following <6> to <15>.

<6> A polymer electrolyte which is a block copolymer comprising a block having an ion-exchange group and a block having substantially no ion-exchange groups, wherein the block having an ion-exchange group has a crosslinkable substituent.

<7> The polymer electrolyte according to <6>, wherein the main chain of the block having an ion-exchange group has an aromatic group.

<8> The polymer electrolyte according to <6> or <7>, wherein the crosslinkable substituent is a thermally crosslinkable substituent.

<9> The polymer electrolyte according to <8>, wherein the thermally crosslinkable substituent is a substituent represented by the following formula (A1):

$$-\left(CH_2OR^3\right) \quad (A1)$$

wherein $R^3$ represents a hydrogen atom or an organic group.

<10> The polymer electrolyte according to any one of <6> to <9>, wherein the block having an ion-exchange group comprises a repeating unit represented by the following formula (1a):

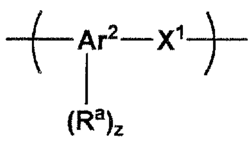

**(1a)**

wherein $Ar^2$ represents an optionally substituted aromatic group; $R^a$ represents a crosslinkable substituent; $X^1$ represents a direct bond or a divalent group; z represents an integer of 1 to 3; and when z is 2 or more, the plurality of $R^a$'s may be the same as or different from each other.

<11> The polymer electrolyte according to <10>, wherein the repeating unit represented by formula (1a) is a repeating unit represented by the following formula (1b):

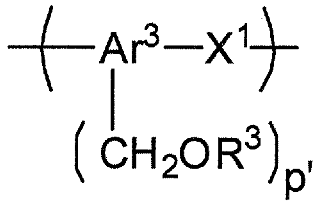 (1b)

wherein $Ar^3$ represents an optionally substituted aromatic group; $R^3$ has the same definition as that described above; $X^1$ represents a direct bond or a divalent group; p' represents an integer of 1 to 3; and when p' is 2 or more, the plurality of $R^3$'s may be the same as or different from each other.
<12> The polymer electrolyte according to <10>, wherein the repeating unit represented by formula (1a) is a repeating unit represented by the following formula (1c):

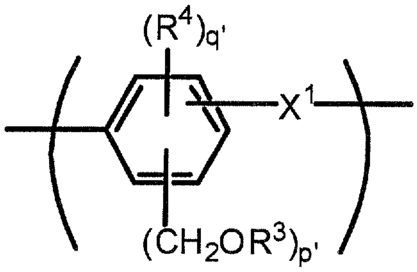 (1c)

wherein $R^3$, $X^1$, and p' have the same definitions as those described above; $R^4$ represents a fluorine atom, an alkyl group having 1 to 20 carbon atoms, an alkoxy group having 1 to 20 carbon atoms, an aryl group having 6 to 20 carbon atoms, an aryloxy group having 6 to 20 carbon atoms, an acyl group having 2 to 20 carbon atoms or an ion-exchange group; q represents an integer of 0 to 3, the sum of p' and q being 4 or less; and when q is 2 or more, the plurality of $R^4$'s may be the same as or different from each other.
<13> The polymer electrolyte according to any one of <10> to <12>, wherein the polymer electrolyte is a polymer electrolyte that has 0.1 to 20% by mass of the repeating unit represented by formula (1a).
<14> The polymer electrolyte according to any one of <10> to <13>, wherein the block having an ion-exchange group comprises a repeating unit represented by formula (1a) and a repeating unit represented by the following formula (7):

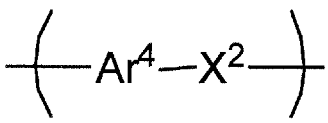 (7)

wherein $Ar^4$ represents an optionally substituted aromatic group and at least one ion-exchange group is bonded to $Ar^4$; and $X^2$ represents a direct bond or a divalent group.
<15> The polymer electrolyte according to any one of <6> to <14>, wherein the block having substantially no ion-exchange groups comprises a repeating unit represented by the following formula (8):

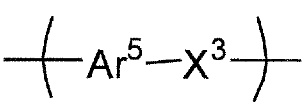 (8)

wherein $Ar^5$ represents an optionally substituted aromatic group and $X^3$ represents a direct bond or a divalent group. Further, the present invention provides the following <16> to <22>.

<16> A crosslinked polymer electrolyte produced by crosslinking the polymer electrolyte according to any one of <1> to <15> by heat treatment at a temperature of 50 to 300°C or by light treatment at an irradiation amount of 1,000 to 30,000 $mJ/cm^2$.

<17> A crosslinked polymer electrolyte produced by crosslinking the polymer electrolyte according to any one of <1> to <15> by heat treatment at a temperature of 50 to 300°C.

<18> The crosslinked polymer electrolyte according to <16> or <17>, wherein when the ion-exchange capacity of the crosslinked polymer electrolyte is denoted by A (meq/g) and the ion-exchange capacity of the polymer electrolyte before the crosslinking to form the crosslinked polymer electrolyte is denoted by B (meq/g), relations of the following formulae (1') and (2') are satisfied:

$$0.8 \le A/B \qquad (1')$$

$$0.5 \le A \le 6 \qquad (2').$$

<19> A polymer electrolyte membrane comprising the polymer electrolyte according to any one of <1> to <15> and/or the crosslinked polymer electrolyte according to any one of <16> to <18>.

<20> A catalyst composition comprising the polymer electrolyte according to any one of <1> to <15> and/or the crosslinked polymer electrolyte according to any one of <16> to <18> and a catalyst material.

<21> A membrane-electrode assembly comprising the polymer electrolyte membrane according to <19> and/or a catalyst layer obtained from the catalyst composition according to <20>.

<22> A fuel cell comprising a pair of separators and a membrane-electrode assembly disposed between the pair of separators, wherein the membrane-electrode assembly is a membrane-electrode assembly according to <21>.

EMBODIMENT FOR CARRYING OUT THE INVENTION

The polymer electrolyte, the crosslinked polymer electrolyte, the polymer electrolyte membrane and applications thereof will be specifically described below.

First, a polymer electrolyte having a repeating unit represented by the following formula (1) in a molecule and having an ion-exchange group in a molecule will be described:

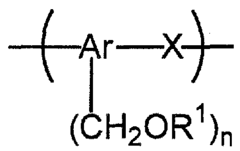 (1)

wherein Ar represents an optionally substituted aromatic group; $R^1$ represents a hydrogen atom or an organic group; X represents a direct bond or a divalent group; n represents an integer of 1 to 3; and when n is 2 or more, the plurality of $R^1$'s may be the same as or different from each other.

Although the ion-exchange group contained in the molecule may be any of an acid group and a basic group, the acid group is preferred for solid polymer fuel cell applications. Examples of the acid group include a weak acid group such as a carboxylic acid group, a phosphinic acid group or a phosphonic acid group; a strong acid group such as a sulfonic acid group, a sulfinic acid group, a sulfonimide group or a sulfuric acid group; a super strong acid group, which is obtained by introducing an electron withdrawing group such as a fluoro group in the adjacent position of an α-, β-position, or the like of the strong acid group; among them, a strong acid group or a super strong acid group is preferred. Further, these acid groups may have been partially or totally exchanged with metal ions or the like to form salts. However, in use as a polymer electrolyte membrane of a solid polymer fuel cell, it is preferred that substantially all of the acid groups be in a free acid state. Conversion to free acid usually can be performed by washing with an acidic solution. Examples of the acid to be used include hydrochloric acid, sulfuric acid, and nitric acid.

Ar in formula (1) is an optionally substituted divalent aromatic group. The divalent aromatic group includes, for example, divalent monocyclic aromatic groups, such as a 1,3-phenylene group, and a 1,4-phenylene group; divalent

condensed ring aromatic groups, such as a 1,3-naphthalenediyl group, a 1,4-naphthalenediyl group, a 1,5-naphthalenediyl group, a 1,6-naphthalenediyl group, a 1,7-naphthalenediyl group, a 2,6-naphthalenediyl group, and a 2,7-naphthalenediyl group; and divalent aromatic heterocyclic groups, such as a pyridinediyl group, a quinoxalinediyl group, and a thiophenediyl group. The divalent monocyclic aromatic groups are preferable.

Further, Ar may be substituted with a fluorine atom, an alkyl group having 1 to 20 carbon atoms, an alkoxy group having 1 to 20 carbon atoms, an aryl group having 6 to 20 carbon atoms, an aryloxy group having 6 to 20 carbon atoms, an acyl group having 2 to 20 carbon atoms or an ion-exchange group.

Here, the alkyl groups having 1 to 20 carbon atoms include, for example, alkyl groups having 1 to 20 carbon atoms, such as a methyl group, an ethyl group, an n-propyl group, an isopropyl group, an n-butyl group, a see-butyl group, an isobutyl group, an n-pentyl group, a 2,2-dimethylpropyl group, a cyclopentyl group, an n-hexyl group, a cyclohexyl group, a 2-methylpentyl group, a 2-ethylhexyl group, a nonyl group, a dodecyl group, a hexadecyl group, an octadecyl group, and an icosyl group; and alkyl groups having 20 or less carbon atoms in total in which the foregoing groups have been substituted with a fluorine atom, a hydroxyl group, a nitrile group, an amino group, a methoxy group, an ethoxy group, an isopropyloxy group, a phenyl group, a naphthyl group, a phenoxy group, a naphthyloxy group, or the like.

Moreover, the alkoxy groups of 1 to 20 carbon atoms include, for example, alkoxy groups of 1 to 20 carbon atoms such as a methoxy group, an ethoxy group, an n-propyloxy group, an isopropyloxy group, an n-butyloxy group, a sec-butyloxy group, a tert-butyloxy group, an isobutyloxy group, an n-pentyloxy group, a 2,2-dimethylpropyloxy group, a cyclopentyloxy group, an n-hexyloxy group, a cyclohexyloxy group, a 2-methylpentyloxy group, a 2-ethylhexyloxy group, a dodecyloxy group, a hexadecyloxy group, and an icosyloxy group; and alkoxy groups having 20 or less carbon atoms in total in which the foregoing groups have been substituted with a fluorine atom, a hydroxyl group, a nitrile group, an amino group, a methoxy group, an ethoxy group, an isopropyloxy group, a phenyl group, a naphthyl group, a phenoxy group, a naphthyloxy group, or the like.

The aryl groups of 6 to 20 carbon atoms include, for example, aryl groups such as a phenyl group, a naphthyl group, a phenanthrenyl group, and an anthracenyl group; and aryl groups having 20 or less carbon atoms in total in which the foregoing groups have been substituted with a fluorine atom, a hydroxyl group, a nitrile group, an amino group, a methoxy group, an ethoxy group, an isopropyloxy group, a phenyl group, a naphthyl group, a phenoxy group, a naphthyloxy group, or the like.

The aryloxy groups of 6 to 20 carbon atoms include, for example, aryloxy groups such as a phenoxy group, a naphthyloxy group, a phenanthrenyloxy group, and an anthracenyloxy group; and aryloxy groups having 20 or less carbon atoms in total in which the foregoing groups have been substituted with a fluorine atom, a hydroxyl group, a nitrile group, an amino group, a methoxy group, an ethoxy group, an isopropyloxy group, a phenyl group, a naphthyl group, a phenoxy group, a naphthyloxy group, or the like.

The acyl groups of 2 to 20 carbon atoms include, for example, acyl groups of 2 to 20 carbon atoms such as an acetyl group, a propionyl group, a butyryl group, an isobutyryl group, a benzoyl group, a 1-naphthoyl group, and a 2-naphthoyl group; and acyl groups having 20 or less carbon atoms in total in which the foregoing groups have been substituted with a fluorine atom, a hydroxyl group, a nitrile group, an amino group, a methoxy group, an ethoxy group, an isopropyloxy group, a phenyl group, a naphthyl group, a phenoxy group, a naphthyloxy group, or the like.

Examples of the ion-exchange group include those described above.

$R^1$ in formula (1) represents a hydrogen atom or an organic group, and preferably a hydrogen atom. Examples of the organic group include an alkyl group having 1 to 20 carbon atoms or an acyl group having 2 to 20 carbon atoms. Considering the availability of a compound or the removal of released byproducts, a methyl group or an acetyl group is preferred.

X in formula (1) represents a direct bond or a divalent group. Examples of the divalent group include a group represented by -O-, -S-, -CO-, -SO-, or $-SO_2-$ and a group represented by the following formula (B1):

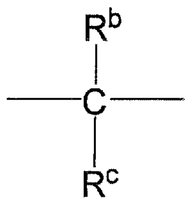

(B1)

wherein $R^b$ and $R^c$ each independently represent a hydrogen atom, an optionally substituted alkyl group having 1 to 20 carbon atoms, an optionally substituted alkoxy group having 1 to 20 carbon atoms, an optionally substituted aryl group having 6 to 20 carbon atoms, an optionally substituted aryloxy group having 6 to 20 carbon atoms, or an optionally

substituted acyl group having 2 to 20 carbon atoms; and $R^b$ and $R^c$ may be connected to form a ring.

Examples of the alkyl group having 1 to 20 carbon atoms, the alkoxy group having 1 to 20 carbon atoms, the aryl group having 6 to 20 carbon atoms, the aryloxy group having 6 to 20 carbon atoms, or the acyl group having 2 to 20 carbon atoms include the specific examples described above. Further, examples of the substituents include those described above. Examples of the ring formed by connecting $R^b$ and $R^c$ include an optionally substituted non-aromatic ring. Examples of the non-aromatic ring include cycloalkanes, such as cyclopentane, cyclohexane and decahydronaphthalene, and cyclohexane is preferred. Further, examples of the substituent include those described above.

Preferable examples of the repeating unit represented by formula (1) include a repeating unit represented by the following formula (2):

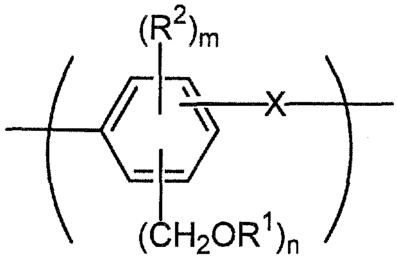

(2)

wherein $R^1$, X, and n have the same definitions as formula (1) described above; $R^2$ represents a fluorine atom, an alkyl group having 1 to 20 carbon atoms, an alkoxy group having 1 to 20 carbon atoms, an aryl group having 6 to 20 carbon atoms, an aryloxy group having 6 to 20 carbon atoms, an acyl group having 2 to 20 carbon atoms or an ion-exchange group; m represents an integer of 0 to 3, the sum of n and m being 4 or less; and when m is 2 or more, the plurality of $R^2$'s may be the same as or different from each other.

Specific examples of the alkyl group having 1 to 20 carbon atoms, the alkoxy group having 1 to 20 carbon atoms, the aryl group having 6 to 20 carbon atoms, the aryloxy group having 6 to 20 carbon atoms, the acyl group having 2 to 20 carbon atoms or the ion-exchange group which is represented by $R^2$ in formula (2) include those described above.

Representative examples of the repeating structure expressed by formula (2) include those described below.

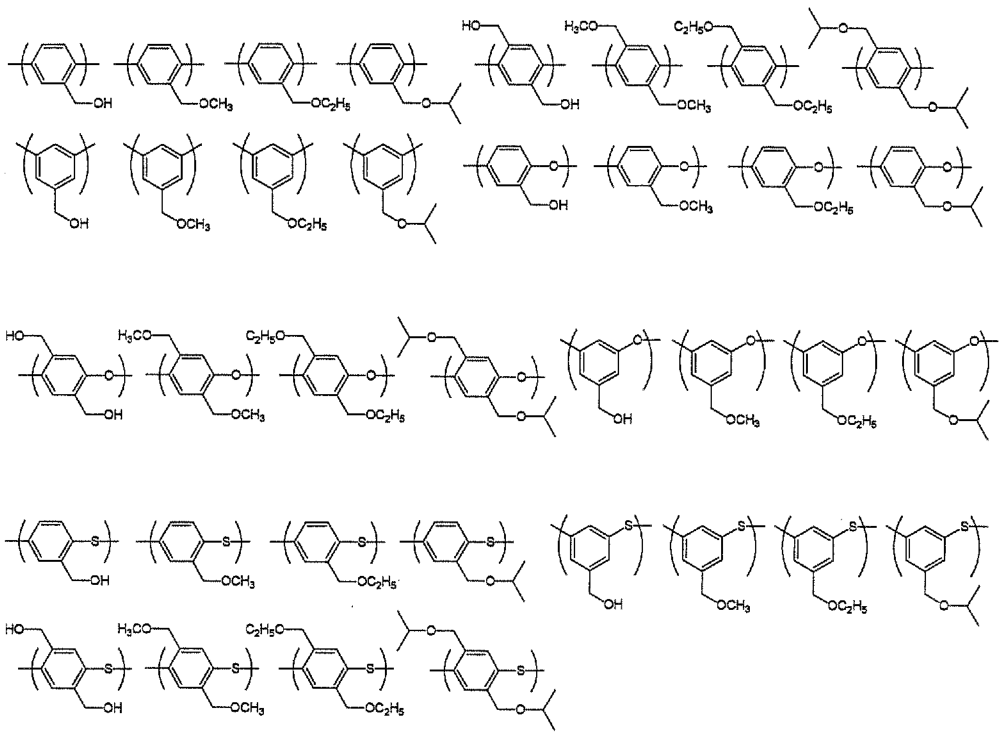

The ratio which is accounted for in the polymer electrolyte by the repeating unit represented by formula (1) is

preferably 0.1% by mass or more, more preferably 0.5% by mass or more and particularly preferably 1% by mass or more, in terms of mass fraction to the total mass of the polymer electrolyte. It is preferable that the mass fraction of repeating unit represented by formula (1) be not less than the lower limit because if so, the methanol barrier property will be expressed more.

Further, the ratio which is accounted for in the polymer electrolyte by the repeating unit represented by formula (1) is preferably 20% by mass or less, and more preferably 15% by mass or less, in terms of mass fraction to the total mass of the polymer electrolyte. It is preferable that the mass fraction of repeating unit represented by formula (1) be not more than the upper limit because if so, sufficient mechanical strength can be maintained and, moreover, the polymer electrolyte can be easily processed into a member to be applied to a solid polymer fuel cell.

The polymer electrolyte of the present invention may have a repeating unit having an ion-exchange group and a repeating unit having no ion-exchange groups as repeating units other than the repeating unit represented by formula (1), and a polymer electrolyte represented by the following formula (3) can be provided as an example:

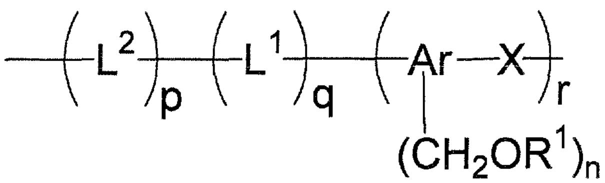

(3)

wherein Ar, $R^1$, X, and n have the same definitions as in formula (1) and p, q and r are the mass fractions of the respective repeating units and p+q+r is 100% by mass; $L^1$ is a repeating unit having an ion-exchange group; $L^2$ is a repeating unit having no ion-exchange groups; and a plurality of $L^1$ are independent and may be different and a plurality of $L^2$ are independent and may be different, provided that $L^1$ and $L^2$ exclude repeating units represented by formula (1).

Herein, the copolymerization type represented by formula (3) may be a random copolymer or a block copolymer or a combination thereof. That is to say, it includes

i) a polymer electrolyte of a copolymerization type where a repeating unit represented by $L^1$, a repeating unit represented by $L^2$, and a repeating unit represented by formula (1) are connected randomly,
ii) a polymer electrolyte of a copolymerization type where a polymer chain composed of repeating units represented by $L^1$ and repeating units represented by $L^2$ alternatively connected partially has repeating units represented by formula (1),
iii) a polymer electrolyte of a copolymerization type having a block where repeating units represented by $L^1$ are connected, a block where repeating units represented by $L^2$ are connected and a block where repeating units represented by formula (1) are connected,
iv) a polymer electrolyte of a copolymerization type having a block where a repeating unit represented by $L^1$ and a repeating unit represented by formula (1) are connected and a block where a repeating unit represented by $L^2$ and a repeating unit represented by formula (1) are connected,
v) a polymer electrolyte of a copolymerization type having a block where repeating units represented by $L^1$ are connected and a block where a repeating unit represented by $L^2$ and a repeating unit represented by formula (1) are connected,
vi) a polymer electrolyte of a copolymerization type having a block where a repeating unit represented by $L^1$ and a repeating unit represented by formula (1) are connected and a block where repeating units represented by $L^2$ are connected,
vii) a polymer electrolyte of a copolymerization type having a block where a repeating unit represented by $L^1$ and a repeating unit represented by $L^2$ are connected and a block where repeating units represented by formula (1) are connected,
viii) a polymer electrolyte that contains, in its polymer chain, the copolymerization type of i), ii), iii), iv), v), vi) or vi) in combination.

"Block copolymer" means any substance of a molecular structure having a long chain formed by joining two or more polymers having different chemical properties by covalent bonds. In the present invention, a structure derived from the polymer in the molecular structure is referred to as "block". The block has at least one kind of 3 or more, preferably 5 or more, repeating units of the same skeleton. The block is preferably one in which at least one kind of 3 or more, more preferably 5 or more, repeating units of the same skeleton have been connected to each other. When the repeating unit has a divalent group in the main chain, a bivalent group at an end of a block may be missing. Examples of the

divalent group at the end include an oxygen atom (-O-) and a sulfur atom (-S-). The block is preferably one that contains at least one kind of 3 or more, more preferably 5 or more, repeating units of the same type having been connected to each other. Herein, the skeleton means the main chain constituting a polymer and containing no substituent. Further, examples of the polymers having "different chemical properties" include a polymer having an ion-exchange group and a polymer having substantially no ion-exchange groups, and a polymer having a group represented by $-(CH_2OR^1)$ and a polymer having substantially no groups represented by $-(CH_2OR^1)$.

That a polymer "has an ion-exchange group" in the present invention means that the polymer is a polymer containing 0.2 or more ion-exchange groups per repeating unit on average, and it is preferable that 0.5 or more such groups be contained per repeating unit on average. On the other hand, that a polymer " has substantially no ion-exchange groups" means that the polymer is a polymer having less than 0.1 ion-exchange groups per repeating unit on average, and it is preferable that 0.05 or less such groups be contained per repeating unit on average. Further, that a polymer " has a group represented by $-(CH_2OR^1)$" means that the polymer is a polymer containing 0.005 or more groups represented by $-(CH_2OR^1)$ per repeating unit on average and it is preferable that 0.01 or more such groups be contained per repeating unit on average. On the other hand, that a polymer "has substantially no groups represented by $-(CH_2OR^1)$" means that the polymer is a polymer containing less than 0.005 groups represented by $-(CH_2OR^1)$ per repeating unit on average and it is preferable that 0.001 or less such groups be contained per repeating unit on average. Herein, "the main chain of a polymer" or " the main chain," means the longest chain forming a polymer in the present invention. Similarly, "the main chain of a block" means the longest chain forming a block in the present invention. The chain is formed of carbon atoms bonded to each other by covalent bonds, the chain optionally being interrupted by a nitrogen atom, an oxygen atom, or the like.

Further, $L^1$ can be selected from various repeating units as far as they have ion-exchange groups. From the viewpoint of increase in the heat resistance of a polymer electrolyte, a repeating unit having an aromatic ring is preferred, and a divalent aromatic group is further preferred. Herein, the aromatic group is a concept including a group obtained by removing two hydrogen atoms from an aromatic hydrocarbon compound or a heteroaromatic compound, and a group where a plurality of groups obtained by removing a hydrogen atom from an aromatic hydrocarbon compound or a heteroaromatic compound have been connected by a direct bond or a divalent group.

Further, $L^2$, which represents any repeating unit having no ion-exchange groups, is preferably a divalent aromatic group from the viewpoint of an increase in the heat resistance of a polymer electrolyte as for $L^1$.

Herein, specific examples of $L^2$, which is a repeating unit having no ion-exchange groups, include the following.

C-1
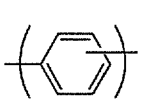
C-2
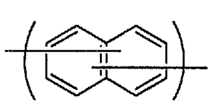
C-3
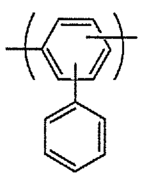
C-4
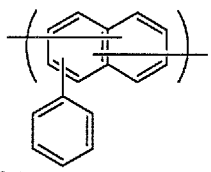
C-5
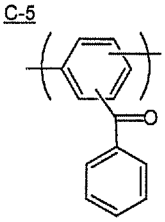
C-6
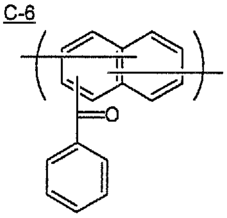
C-7
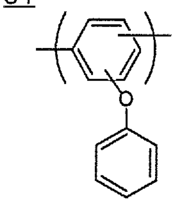
C-8
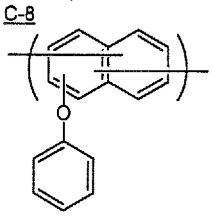
C-9
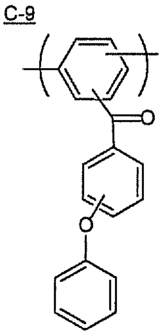
C-10
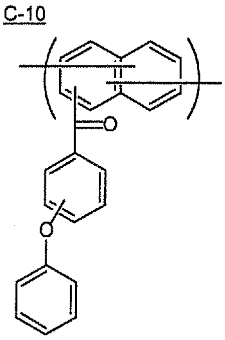
C-11
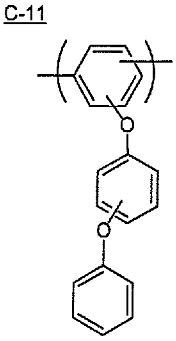
C-12
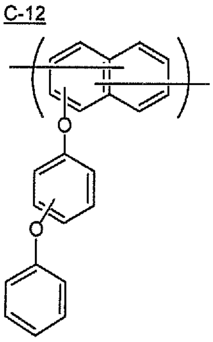

C-13

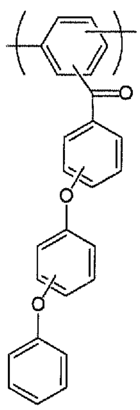

C-14

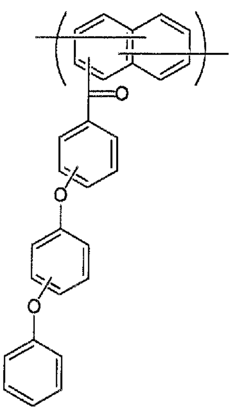

C-15

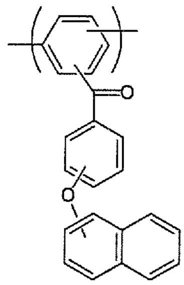

C-16

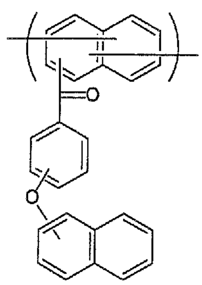

C-17

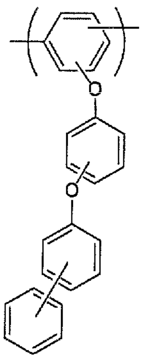

C-18

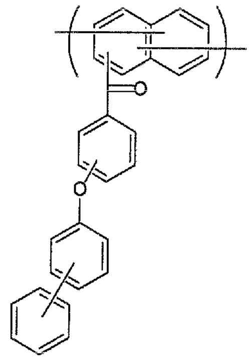

D-1

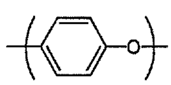

D-2

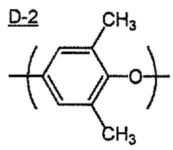

D-3

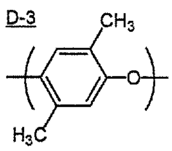

D-4

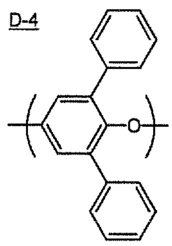

D-5

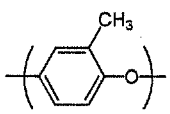

D-6

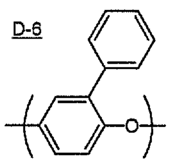

D-7

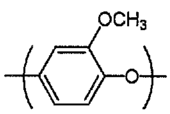

D-8

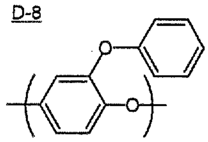

D-9

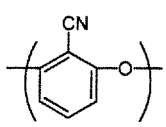

D-10

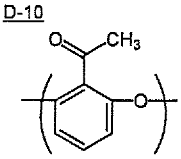

D-11

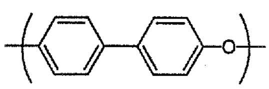

D-12

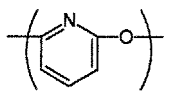

D-13

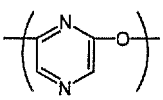

D-14

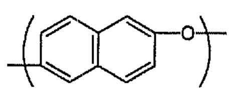

D-15

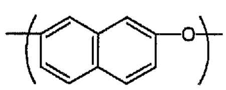

D-16

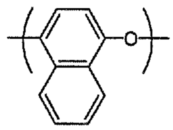

D-17

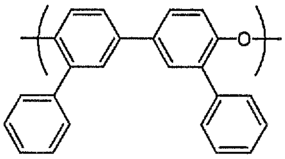

D-18

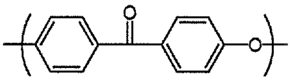

D-19

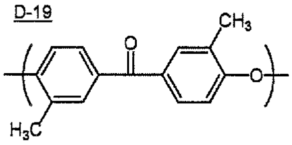

D-20

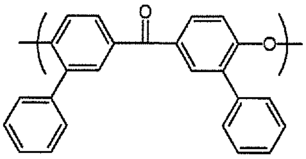

D-21

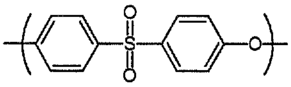

D-23

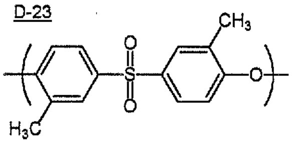

D-24

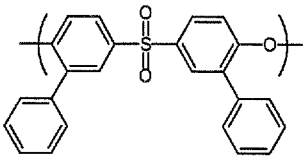

D-25

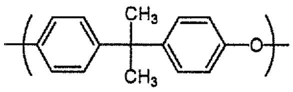

D-26

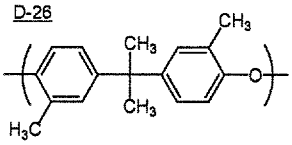

D-27

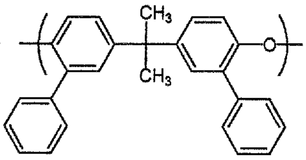

D-28

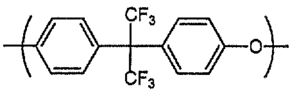

D-29

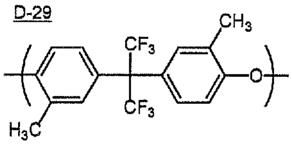

D-30

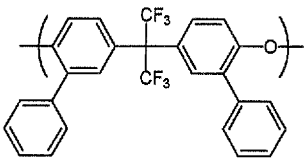

E-1

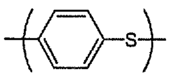

E-2

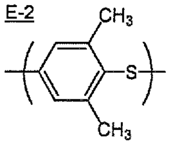

E-3

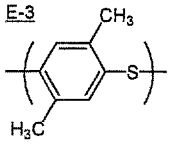

E-4

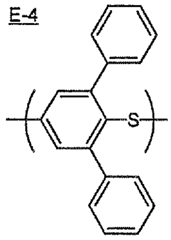

E-5

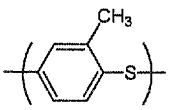

E-6

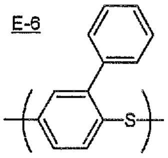

E-7

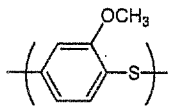

E-8

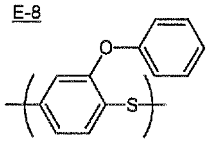

E-9

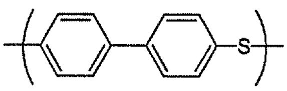

E-10

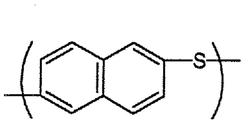

E-11

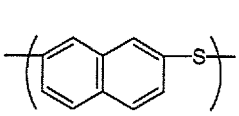

E-12

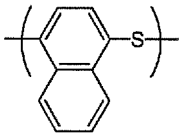

E-13

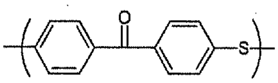

E-14

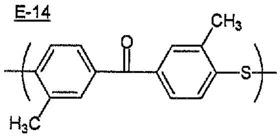

E-15

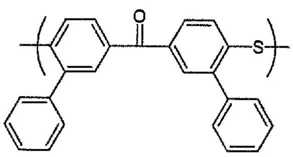

E-16

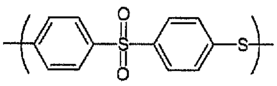

E-17

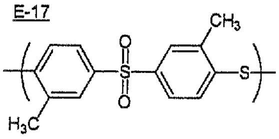

E-18

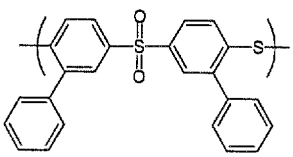

E-19

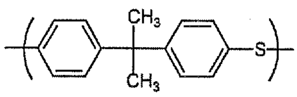

E-20

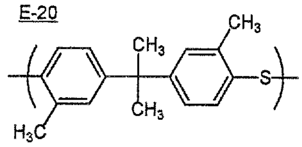

E-21

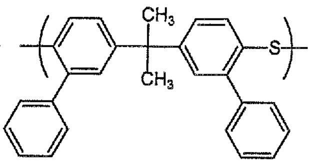

E-22

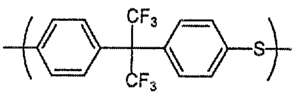

E-23

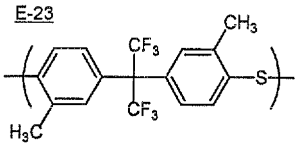

E-24

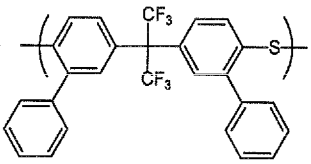

Specific examples of $L^1$, which is a divalent group containing an ion-exchange group, include groups resulting from substituting aromatic rings in the specific examples of $L^2$ provided above with at least one group selected from the group consisting of an ion-exchange group and a group containing an ion-exchange group provided below as examples.

$$*-\left[CH_2\right]_s-Z \qquad *-\left[CF_2\right]_s-Z \qquad *-\left[CH_2\right]_s-O-\left[CH_2\right]_t-Z \qquad *-\left[CF_2\right]_s-O-\left[CF_2\right]_t-Z$$

$$*-T-\left[CH_2\right]_s-Z \qquad *-T-\left[CF_2\right]_s-Z$$

wherein Z represents an ion-exchange group; s and t each independently represent an integer of 0 to 12; T represents any one of -O-, -S-, -CO-, and $-SO_2-$; and * represents a bond.

As to the mass fractions of the repeating units in formula (3), it is preferable that p be 0 to 95% by mass, q be 5 to 99.9% by mass and r be 0.1 to 20% by mass, and it is more preferable that p be 15 to 90% by mass, q be 10 to 65% by mass and r be 0.5 to 20% by mass.

The amount of halogen atoms that are present in the polymer electrolyte of the present invention is preferably 15% by mass or less based on the total mass of the polymer electrolyte, and more preferably no halogen atoms are contained. Examples of the halogen include fluorine, chlorine, bromine and iodine.

Further, the amount of the ion-exchange group that is present in the polymer electrolyte of the present invention is preferably 0.5 meq/g to 6.0 meq/g, more preferably 0.8 meq/g to 5.0 meq/g, and still more preferably 0.8 meq/g to 4.0 meq/g in terms of ion-exchange capacity. It is preferred that the ion-exchange capacity that signifies the amount of the ion-exchange group be 0.5 meq/g or more in members such as an ion conductive membrane related to solid polymer fuel cells because if so, ion conductivity is further increased. On the other hand, it is preferred that the ion-exchange capacity that signifies the introduction amount of the ion-exchange group be 6.0 meq/g or less because if so, water resistance is improved. The method of measuring the ion-exchange capacity may be the following method.

<Measurement of Ion-Exchange Capacity>

A polymer electrolyte to be provided for measurement is formed into a film by a solution casting method, yielding a polymer electrolyte membrane, which is then washed with an acid, and thereby an ion-exchange group is converted into a free acid form. The formed polymer electrolyte membrane is cut so as to have a suitable mass, and the dry mass of the cut polymer electrolyte membrane is measured. Subsequently, the membrane is immersed in an aqueous sodium hydroxide solution and an ion-exchange group in a free acid form is neutralized. Then, the solution in which the polymer electrolyte membrane is immersed is titrated by adding hydrochloric acid thereto slowly to determine a neutralization point, and the amount of residual sodium hydroxide is determined from the amount of the hydrochloric acid needed for the neutralization, and the ion-exchange capacity (unit: meq/g) of the polymer electrolyte is calculated from the dry mass

of the used polymer electrolyte membrane (the cut polymer electrolyte membrane).

The polystyrene-equivalent weight average molecular weight or the polyglycol-equivalent weight average molecular weight, determined by GPC (gel permeation chromatography), of the polymer electrolyte to be used in the present invention is usually approximately from 1,000 to 1,000,000, and preferably approximately from 5,000 to 500,000.

Subsequently, a method for the production of a polymer electrolyte represented by formula (3), which is referred among the polymer electrolytes of the present invention, will be described below.

<Polymerization Method For Random Copolymer>

When a repeating unit represented by formula (1), a repeating unit $L^1$ having an ion-exchange group and a repeating unit $L^2$ having no other ion-exchange groups forming a polymer electrolyte that is preferred in the present invention are in the form of a random copolymer, it can be produced by copolymerizing a monomer from which a repeating unit represented by formula (1) will be derived, a monomer from which a repeating unit having an ion-exchange group will be derived, and a monomer from which a repeating unit having no ion-exchange groups will be derived.

In the preparation of a polymer electrolyte by copolymerizing one or more monomers from which the repeating unit represented by the formula (1) will be derived and one or more monomers from which the other repeating unit will be derived, a monomer represented by the following formula (4), for example, is to be used as the monomer from which the repeating unit represented by the formula (1) will be derived:

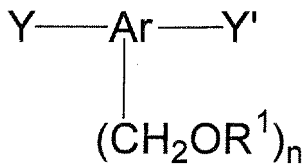 (4)

wherein Ar, $R^1$ and n have the same definitions as the formula (1); and Y and Y' each independently represent a leaving group or a nucleophilic group.

Herein, the leaving group is a group selected from the group consisting of halogeno groups and $-OSO_2G$ in which G represents an alkyl group, a fluorine-substituted alkyl group or an aryl group. Examples of the nucleophilic group include a hydroxyl group and a mercapto group. Specific examples of the alkyl group and aryl group include those described above.

Further, examples of the monomer from which the repeating unit $L^1$ having the ion-exchange group will be derived include a monomer represented by the following formula (5):

$$Q^1\text{-}L^{1a}\text{-}Q^2 \qquad (5)$$

wherein $L^{1a}$ represents a divalent aromatic group having the ion-exchange group; and $Q^1$ and $Q^2$ each independently represent a nucleophilic group or a leaving group.

Further, examples of the monomer from which the repeating unit $L^2$ having no ion-exchange groups will be derived include a monomer represented by the following formula (6):

$$Q^3\text{-}L^{2a}\text{-}Q^4 \qquad (6)$$

wherein $L^{2a}$ represents a divalent aromatic group having no ion-exchange groups; and $Q^3$ and $Q^4$ each independently represents a nucleophilic group or a leaving group.

Examples of a method for polymerization include a method of performing coupling in the presence of a zero-valent transition metal catalyst to form a single bond between aromatic rings in, for example, a case of the copolymerization of a monomer where Y and Y' in the formula (4) are leaving groups, a monomer where $Q^1$ and $Q^2$ in the formula (5) are leaving groups and a monomer where $Q^3$ and $Q^4$ in the formula (6) are leaving groups. Another example is a method in which copolymerization is performed by using a condensation reaction in which a leaving group and a nucleophilic group are condensed to form an ether bond or a thioether bond in a case of the copolymerization of a monomer where Y and Y' in the formula (4) are leaving groups, a monomer where $Q^1$ and $Q^2$ in the formula (5) are leaving groups and a monomer where $Q^3$ and $Q^4$ in the formula (6) are nucleophilic groups.

The method of the copolymerization using the condensation reaction may use:

a combination of a monomer where Y and Y' in the formula (4) are leaving groups, a monomer where both $Q^1$ and

$Q^2$ in the formula (5) are nucleophilic groups and a monomer where both $Q^3$ and $Q^4$ in the formula (6) are leaving groups,
a combination of a monomer where both Y and Y' in the formula (4) are nucleophilic groups, a monomer where both $Q^1$ and $Q^2$ in the formula (5) are leaving groups and a monomer where both $Q^3$ and $Q^4$ in the formula (6) are nucleophilic groups,
a combination of a monomer where both Y and Y' in the formula (4) are nucleophilic groups, a monomer where both $Q^1$ and in the formula (5) are nucleophilic groups and a monomer where both $Q^3$ and $Q^4$ in the formula (6) are leaving groups,
a combination of a monomer where Y and Y' in the formula (4) are leaving groups, a monomer where both $Q^1$ and $Q^2$ in the formula (5) are nucleophilic groups and a monomer where both $Q^3$ and $Q^4$ in the formula (6) are nucleophilic groups,
a combination of a monomer where Y and Y' in the formula (4) are nucleophilic groups, a monomer where both $Q^1$ and $Q^2$ in the formula (5) are leaving groups and a monomer where both $Q^3$ and $Q^4$ in the formula (6) are leaving groups, or
a combination of a monomer where Y is a leaving group and Y' is a nucleophilic group in the formula (4), a monomer where $Q^1$ is a leaving group and $Q^2$ is a nucleophilic group in the formula (5) and a monomer where $Q^3$ is a leaving group and $Q^4$ is a nucleophilic group in the formula (6).

First, the coupling method in the presence of a zero-Valent transition metal catalyst is described.

Examples of the zero-valent transition metal complex include zero-valent nickel complexes and zero-valent palladium complexes. Among them, zero-valent nickel complexes are preferably used.

As to the zero-valent transition metal complex, a commercially available product or a product previously prepared may be fed to a polymerization reaction system, or alternatively it may be generated from a transition metal compound by the action of a reductant in the polymerization reaction system. The latter case can be conducted by, for example, making the reductant act on the transition metal compound.

In any case, the addition of the ligand described below is preferable from the viewpoint of increasing the yield.

Examples of the zero-valent palladium complex include tetrakis(triphenylphosphine)palladium(0). Examples of the zero-valent nickel complex include bis(cyclooctadiene)nickel(0), (ethylene)bis(triphenylphosphine)nickel(0) and tetrakis(triphenylphosphine)nickel(0). Among them, bis(cyclooctadiene)nickel(0) is preferably used.

In the case of reacting the transition metal compound with the reductant to generate a zero-valent transition metal complex, the transition metal compound used is usually a divalent transition metal compound. However a zero-valent transition metal compound can also be used. Among them, divalent nickel compounds and divalent palladium compounds are preferred. Examples of the divalent nickel compound include nickel chloride, nickel bromide, nickel iodide, nickel acetate, nickel acetylacetonate, bis(triphenylphosphine) nickel chloride, bis(triphenylphosphine)nickel bromide and bis(triphenylphosphine)nickel iodide. Examples of the divalent palladium compound include palladium chloride, palladium bromide, palladium iodide and palladium acetate.

Examples of the reductant include metals such as zinc and magnesium, alloys such as these metals with, for example, copper, sodium hydride, hydrazine and derivatives thereof, and lithium aluminum hydride. These can be used together with ammonium iodide, trimethylammonium iodide, triethylammonium iodide, lithium iodide, sodium iodide and potassium iodide, if necessary.

An amount of zero-valent transition metal complex to be used is, when the reductant is not used, in molar terms usually 0.1 to 5.0 times the total mole amount of the monomer represented by the formula (4) and the monomer represented by the formulae (5) and (6). Using a too small amount tends to result in a product of lower molecular weight, and thus the amount used is in molar terms preferably 1.5 times or more, more preferably 1.8 times or more, and even more preferably 2.1 times or more. The upper limit of the amount used is in molar terms desirably 5.0 times or less, since using a too large amount tends to require complicated post-processing.

When the reductant is used, an amount of transition metal compound used is in molar terms 0.01 to 1 times the total mole amount of the monomer represented by the formula (4) and the monomer represented by the formulae (5) and (6). Using a too small amount tends to result in a polymer electrolyte of lower molecular weight, and thus the amount used is in molar terms preferably 0.03 times or more. The upper limit of the amount used is in molar terms desirably 1.0 molar times or less, since using a too large amount tends to require complicated post-processing.

An amount of reductant used is in molar terms usually 0.5 to 10 times the total mole amount of the monomer represented by the formula (4) and the monomer represented by the formulae (5) and (6). Using a too small amount tends to result in a polymer electrolyte of lower molecular weight, and thus the amount used is in molar terms preferable 1.0 times or more. The upper limit of the amount used is in molar terms desirably 10 times or less, since using a too large amount tends to require complicated post-processing.

Examples of the ligand include 2,2'-bipyridyl, 1,10-phenanthroline, methylene bis-oxazoline, N,N,N',N'-tetramethylethylenediamine, triphenylphosphine, tritolylphosphine, tributylphosphine, triphenoxyphosphine, 1,2-bisdiphenylphosphinoethane and 1,3-bisdiphenylphosphinopropane. From the viewpoints of versatility, low cost, high reactivity and high yield, triphenylphosphine and 2,2'-bipyridyl are preferred. Since a combination of bis(1,5-cyclooctadiene)nickel(0) with 2,2'-bipyridyl increases a yield of polymer, this combination is preferably used.

When the ligand coexists, an amount of the ligand used is in molar terms usually about 0.2 to about 10 times, and preferably about 1.0 to about 5.0 times the zero-valent transition metal complex based on the metal atom.

The coupling reaction is usually conducted in the presence of a solvent. Examples of the solvent include aromatic hydrocarbon solvents such as benzene, toluene, xylene, n-butylbenzene, mesitylene and naphthalene; ether solvents such as diisopropyl ether, tetrahydrofuran, 1,4-dioxane, diphenyl ether, dibutyl ether, tert-butyl methyl ether and dimethoxyethane; aprotic polar solvents such as N,N-dimethylformamide (hereinafter referred to as "DMF"), N,N-dimethylacetamide (hereinafter referred to as "DMAc"), N-methyl-2-pyrrolidone (hereinafter referred to as "NMP"), hexamethylphosphoric triamide and dimethyl sulfoxide (hereinafter referred to as "DMSO"); aliphatic hydrocarbon solvents such as tetralin and decalin; ester solvents such as ethyl acetate, butyl acetate and methyl benzoate; and alkyl halide solvents such as chloroform and dichloroethane.

In order to increase the molecular weight of a polymer electrolyte to be produced, a solvent is preferred in which the polymer electrolyte to be obtained can be dissolved sufficiently, and thus tetrahydrofuran, 1,4-dioxane, DMF, DMAc, DMSO, NMP and toluene, which are good solvents for the polymer electrolyte, are preferred. They may be used in mixture of two or more of them. Among solvents, DMF, DMAc, DMSO, NMP and mixed solvents of two or more of them are preferably used. As used herein, the "good solvent" means any solvent that can dissolve 5 g or more polymer electrolyte in 100 g of the solvent at 25°C.

The solvent is usually used in an amount of 5 to 500 times, and preferably 20 to 100 times the total mass of the monomer represented by the formula (4) and the monomer represented by the formulae (5) and (6).

The reaction temperature is usually within the range from 0°C to 250°C, and preferably about 10°C to about 100°C. The condensation time is usually about 0.5 to about 24 hours. In order to increase the molecular weight of a produced polymer, it is particularly preferred to make the zero-valent transition metal complex, the monomer represented by the formula (4) and the monomer represented by the formulae (5) and (6) react at a temperature of 45°C or higher. A preferred action temperature is usually 45°C to 200°C, and particularly preferably about 50°C to about 100°C.

The method of making the zero-valent transition metal complex, the monomer represented by the formula (4) and the monomer represented by the formulae (5) and (6) act on each other may be an operation of adding one to the other, or an operation of adding them simultaneously to a reactor. They may be added all at once, but they are preferably added portionwise in terms of generation of heat. Addition in the presence of a solvent is also preferred. A mixture thus obtained is held usually at a temperature of about 45°C to about 200°C, and preferably about 50°C to about 100°C.

Next, the polymerization method using condensation reaction of a leaving group with a nucleophilic group is described.

The condensation reaction is a condensation reaction occurring between a leaving group and a nucleophilic group as described above and it is usually a method of condensing them in a nucleophilic substitution-like manner in the presence of a basic catalyst.

Examples of the basic catalyst include sodium hydroxide, potassium hydroxide, cesium hydroxide, sodium carbonate, potassium carbonate, cesium carbonate, sodium hydrogen carbonate and potassium hydrogen carbonate. The basic catalyst is not specifically limited as far as it can convert a hydroxyl group and a mercapto group, which are nucleophilic groups, into an alcoholate group and a thiolate group, respectively.

The condensation reaction is usually conducted in the presence of a solvent. Examples of the solvent include aromatic hydrocarbon solvents such as benzene, toluene, xylene, n-butylbenzene, mesitylene and naphthalene; ether solvents such as diisopropyl ether, tetrahydrofuran, 1,4-dioxane, diphenyl ether, dibutyl ether, tert-butyl methyl ether and dimethoxyethane; aprotic polar solvents such as DMF, DMAc, NMP, hexamethylphosphoric triamide and DMSO; aliphatic hydrocarbon solvents such as tetralin and decalin; and ester solvents such as ethyl acetate, butyl acetate and methyl benzoate.

In order to increase the molecular weight of a polymer to be produced, it is preferred that the polymer has been dissolved sufficiently, and thus tetrahydrofuran, 1,4-dioxane, DMF, DMAc, DMSO, NMP and toluene, which are good solvents for the polymer, are preferred. They may be used in mixture of two or more of them. Among solvents, DMF, DMAc, DMSO, NMP and mixed solvents of two or more of them are preferably used.

In some cases, water is generated as a byproduct during the condensation reaction. In such occasions, the water can be removed from the reaction system as an azeotropic mixture by making toluene or the like exist together in the reaction system, irrespective of the polymerization solvent.

The solvent is usually used in an amount of 5 to 500 times, and preferably 20 to 100 times the total mass of the monomer represented by the formula (4) and the monomer represented by the formulae (5) and (6).

The condensation reaction may be conducted within the temperature range from 0°C to 350°C, and preferably about 50°C to about 250°C. At a temperature lower than 0°C, it is difficult to achieve a sufficient reaction, and at a temperature of higher than 350°C, the decomposition of a polymer may advance.

<Polymerization Method for Block Copolymer>

Next, a production method with respect to a block copolymer is described; as to unit reactions for polymerization, as in the case of the above-mentioned random polymerization, preferred is a method of performing coupling in the presence of a zero-valent transition metal catalyst, that is, a method of performing coupling in the presence of a zero-valent transition metal catalyst to form a single bond between aromatic rings, , or a method in which copolymerization is performed by using a condensation reaction in which a leaving group and a nucleophilic group are condensed to form an ether bond or a thioether bond. The methods include: i) a method where a polymer obtained from a monomer represented by formula (4) and a monomer represented by formula (5), and a polymer obtained from a monomer represented by formula (4) and a monomer represented by formula (6) can be produced respectively; and both polymers are bonded to obtain a block copolymer; ii) a method where one of a polymer obtained from a monomer represented by formula (4) and a monomer represented by formula (5), and a polymer obtained from a monomer represented by formula (4) and a monomer represented by formula (6) can be produced in advance, a monomer from which the other polymer is derived and the previously produced polymer are reacted to obtain a block copolymer.

<Method of Purification of Polymer Electrolyte>

The random polymer or the block copolymer thus obtained as above can be collected from the reaction mixture by the application of conventional methods. For example, the product can be precipitated by adding a poor solvent in which the produced polymer electrolyte is insoluble or hardly soluble and a target material can be collected by filtration or the like. The product can further be purified by washing with water or repeating reprecipitation with a good solvent and a poor solvent, if necessary. Purification can be carried out by a combination of two or more means selected from the means described above. As used herein, the "poor solvent" means any solvent that cannot dissolve 1 g or more of polymer electrolyte in 100 g of solvent at 25°C.

Next, a polymer electrolyte composed of a block copolymer containing a block having an ion-exchange group and a block having substantially no ion-exchange groups in which at least one block having the ion-exchange group has a crosslinkable substituent will be described. The block having an ion-exchange group all preferably has a crosslinkable substituent.

In the present invention, "block copolymer" means a substance having a molecular structure having a long chain formed by joining two or more polymers having different chemical properties by a covalent bond. In the present invention, a structure derived from the polymer in the molecular structure is referred to as "block". The block has at least one kind of 3 or more, preferably 5 or more, repeating units of the same skeleton. The block is preferably one in which at least one kind of 3 or more, more preferably 5 or more, repeating units of the same skeleton have been connected to each other. When the repeating unit has a divalent group in the main chain, a divalent group at an end of block may be missing. Examples of the divalent group at the end include an oxygen atom (-O-), and a sulfur atom (-S-). The block preferably contains is preferably one that contains at least one kind of 3 or more, more preferably 5 or more, repeating units of the same type having been connected to each other. Herein, the skeleton means the main chain forming a polymer and containing no substituent. Furthermore, examples of the polymers having "different chemical properties" include a polymer having an ion-exchange group and a polymer having substantially no ion-exchange groups. Herein, the "ion-exchange group" is a group involving ion conduction, particularly proton conduction when polyarylene-containing block copolymer of the present invention is used in the form of a membrane. "To have an ion-exchange group" means that the polymer is a polymer containing 0.2 or more ion-exchange groups per repeating unit on average, and it is preferable that 0.5 or more such groups be contained per repeating unit on average. On the other hand that a polymer " has substantially no ion-exchange groups" means that the polymer is a polymer of less than 0.1 ion-exchange groups per repeating unit on average, and it is preferable that 0.05 or less such groups be contained per repeating unit on average.

Herein, "the main chain of a polymer" or "the main chain" means the longest chain forming a polymer in the present invention. Similarly, "the main chain of a block" means the longest chain forming a block in the present invention. The chain is formed of carbon atoms bonded each to other by covalent bonds. At this time, the chain may be interrupted by a nitrogen atom, an oxygen atom, or the like.

It is preferred that the main chain of the block having the ion-exchange group contains an aromatic group. Further, it is preferred that the main chain of the block having no ion-exchange groups contains an aromatic group. A ratio by which the aromatic group is accounted for in the polymer electrolyte is preferably 50% by mass or more, more preferably 80% by mass or more, in terms of mass fraction with respect to the total mass of the polymer electrolyte. A ratio by which the aromatic group is accounted for in a block having the ion-exchange group is preferably 50% by mass or more, and more preferably 80% by mass or more in terms of mass fraction with respect to the total mass of the block having the ion-exchange group.

The aforementioned crosslinkable substituents are any substituents capable of forming new covalent bonds between polymers as a result of reactions, caused by heat, light or the like, of crosslinkable substituents themselves

and/or crosslinkable substituents with aromatic rings contained in a polymer electrolyte.

The crosslinkable substituent is preferably a thermally crosslinkable substituent and thermally crosslinkable substituents are any substitutents capable of forming new covalent bonds between polymers as a result of reactions, caused by heat, of crosslinkable substituents themselves and/or crosslinkable substituents with aromatic rings contained in a polymer electrolyte. Specific examples of the thermally crosslinkable substituents include an alkoxymethyl group represented by the following formula (A1), an acyl group represented by the following formula (A2) and a group having an unsaturated bond. Examples of the group having an unsaturated bond include an alkenyl group represented by the following formula (A3) and an alkynyl group represented by the following formula (A4). Among them, an alkoxymethyl group represented by the following formula (A1) and an acyl group represented by the following formula (A2) are preferred and an alkoxymethyl group represented by the following formula (A1) is more preferred. When the polymer electrolyte of the present invention has two or more crosslinkable substituents, a plurality of crosslinkable substituents may be the same as or different from each other.

$$-\left(CH_2OR^3\right) \qquad (A1)$$

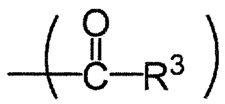

(A2)

$$-\left(CH{=}CH{-}R^3\right) \qquad (A3)$$

$$-\left(C{\equiv}C{-}R^3\right) \qquad (A4)$$

In the formulae, $R^3$'s each independently represent a hydrogen atom or an organic group.

$R^3$ represents a hydrogen atom or an organic group and preferably a hydrogen atom. Examples of the organic group include an alkyl group having 1 to 20 carbon atoms or an acyl group having 2 to 20 carbon atoms. Considering the availability of a compound or the removal of released byproducts, a methyl group or an acetyl group is preferred.

The block having the ion-exchange group preferably contains a repeating unit represented by the following formula (1a):

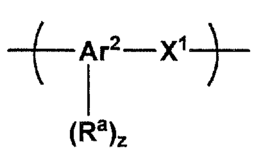

**(1a)**

wherein $Ar^2$ represents an optionally substituted aromatic group; $R^a$ represents a crosslinkable substituent; $X^1$ represents a direct bond or a divalent group; z represents an integer of 1 to 3; and when z is 2 or more, the plurality of $R^a$'s may be the same as or different from each other.

$Ar^2$ in the formula (1a) represents an optionally substituted aromatic group. Examples of the aromatic group include monocyclic aromatic groups such as a 1,3-phenylene group and a 1,4-phenylene group; condensed ring aromatic groups such as a 1,3-naphthalenediyl group, a 1,4-naphthalenediyl group, a 1,5-naphthalenediyl group, a 1,6-naphthalenediyl group, a 1,7-naphthalenediyl group, a 2,6-naphthalenediyl group, and a 2,7-naphthalenediyl group; and aromatic heterocyclic groups such as a pyridinediyl group, a quinoxalinediyl group, and a thiophenediyl group. The monocyclic

aromatic groups are preferable.

Further, $Ar^2$ may be substituted with a fluorine atom, an alkyl group having 1 to 20 carbon atoms, an alkoxy group having 1 to 20 carbon atoms, an aryl group having 6 to 20 carbon atoms, an aryloxy group having 6 to 20 carbon atoms, an acyl group having 2 to 20 carbon atoms, an ion-exchange group, or the like.

Here, alkyl groups of 1 to 20 carbon atoms include, for example, alkyl groups of 1 to 20 carbon atoms such as a methyl group, an ethyl group, an n-propyl group, an isopropyl group, an n-butyl group, a see-butyl group, an isobutyl group, an n-pentyl group, a 2,2-dimethylpropyl group, a cyclopentyl group, an n-hexyl group, a cyclohexyl group, a 2-methylpentyl group, a 2-ethylhexyl group, a nonyl group, a dodecyl group, a hexadecyl group, an octadecyl group, and an icosyl group; and alkyl groups of a total of 20 or less carbon atoms in which they are substituted with a fluorine atom, a hydroxyl group, a nitrile group, an amino group, a methoxy group, an ethoxy group, an isopropyloxy group, a phenyl group, a naphthyl group, a phenoxy group, a naphthyloxy group, or the like.

Moreover, alkoxy groups of 1 to 20 carbon atoms include, for example, alkoxy groups of 1 to 20 carbon atoms such as a methoxy group, an ethoxy group, an n-propyloxy group, an isopropyloxy group, an n-butyloxy group, a sec-butyloxy group, a tert-butyloxy group, an isobutyloxy group, an n-pentyloxy group, a 2,2-dimethylpropyloxy group, a cyclopentyloxy group, an n-hexyloxy group, a cyclohexyloxy group, a 2-methylpentyloxy group, a 2-ethylhexyloxy group, a dodecyloxy group, a hexadecyloxy group, and an icosyloxy group; and alkoxy groups of a total of 20 or less carbon atoms in which they are substituted with a fluorine atom, a hydroxyl group, a nitrile group, an amino group, a methoxy group, an ethoxy group, an isopropyloxy group, a phenyl group, a naphthyl group, a phenoxy group, a naphthyloxy group, or the like.

Aryl groups of 6 to 20 carbon atoms include, for example, aryl groups such as a phenyl group, a naphthyl group, a phenanthrenyl group, and an anthracenyl group; and aryl groups of a total of 20 or less carbon atoms in which they are substituted with a fluorine atom, a hydroxyl group, a nitrile group, an amino group, a methoxy group, an ethoxy group, an isopropyloxy group, a phenyl group, a naphthyl group, a phenoxy group, a naphthyloxy group, or the like.

Aryloxy groups of 6 to 20 carbon atoms include, for example, aryloxy groups such as a phenoxy group, a naphthyloxy group, a phenanthrenyloxy group, and an anthracenyloxy group; and aryloxy groups of a total of 20 or less carbon atoms in which they are substituted with a fluorine atom, a hydroxyl group, a nitrile group, an amino group, a methoxy group, an ethoxy group, an isopropyloxy group, a phenyl group, a naphthyl group, a phenoxy group, a naphthyloxy group, or the like.

Acyl groups of 2 to 20 carbon atoms include, for example, acyl groups of 2 to 20 carbon atoms such as an acetyl group, a propionyl group, a butyryl group, an isobutyryl group, a benzoyl group, a 1-naphthoyl group, and a 2-naphthoyl group; and acyl groups of a total of 20 or less carbon atoms in which they are substituted with a fluorine atom, a hydroxyl group, a nitrile group, an amino group, a methoxy group, an ethoxy group, an isopropyloxy group, a phenyl group, a naphthyl group, a phenoxy group, a naphthyloxy group, or the like.

While the ion-exchange group may be any of an acid group and a basic group, an acid group is preferred from the viewpoint of the use of the solid polymer fuel cell. Examples of the acid group include a weak acid group such as a carboxylic acid group, a phosphinic acid group or a phosphonic acid group; a strong acid group such as a sulfonic acid group, a sulfinic acid group, a sulfonimide group or a sulfuric acid group; and a super strong acid group obtained by introducing an electron withdrawing group such as a fluoro group in the adjacent positions of the $\alpha$-, $\beta$-position, or the like of the strong acid group; among them, a strong acid group or a super strong acid group is preferred. Further, these acid groups may be partially or totally replaced with metal ions to form a salt, when these acid groups are used as a polymer electrolyte membrane of a solid polymer fuel cell, all of these acid groups are substantially a state of free acid. Conversion to the free acid may usually be performed by washing with acidic solution. Examples of acid to be used include hydrochloric acid, sulfuric acid and nitric acid. It is preferred that the ion-exchange group is directly bonded to an aromatic ring forming the main chain of the polymer.

As described above, the ion-exchange group may be directly bonded or bonded through a linkage group to an aromatic ring forming the main chain. When the ion-exchange group is directly bonded to an aromatic ring forming the main chain, the polymer of the present invention can be easily prepared by using commercial available material and this is thus preferred.

$X^1$ in formula (1) represents a direct bond or a divalent group. Examples of the divalent group include a group represented by -O-, -S-, -CO-, -SO-, or $-SO_2-$ and a group represented by the following formula (B2):

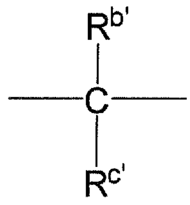

(B2)

wherein $R^{b'}$ and $R^{c'}$ each independently represents a hydrogen atom; an optionally substituted alkyl group having 1 to 20 carbon atoms; an optionally substituted alkoxy group having 1 to 20 carbon atoms; an optionally substituted aryl group having 6 to 20 carbon atoms; an optionally substituted aryloxy group having 6 to 20 carbon atoms; an optionally substituted acyl group having 2 to 20 carbon atoms; and $R^{b'}$ and $R^{c'}$ may be connected to form a ring.

Examples of an alkyl group having 1 to 20 carbon atoms, an alkoxy group having 1 to 20 carbon atoms, an aryl group having 6 to 20 carbon atoms, an aryloxy group having 6 to 20 carbon atoms, or an acyl group having 2 to 20 carbon atoms include the specific examples described above. Further, examples of the substituent include those described above. Examples of the ring formed by connecting $R^{b'}$ and $R^{c'}$ include an optionally substituted non-aromatic ring. Examples of the non-aromatic ring include cycloalkanes such as cyclopentane, cyclohexane and decahydronaphthalene, and preferable examples include cyclohexane. Further, examples of the substituent include those described above.

In the polymer electrolyte, it is preferred that the polymer electrolyte has 0.1% by mass or more of the repeating unit represented by formula (1a), more preferably 0.5% by mass or more since methanol barrier properties are more expressed. And 20% by mass or less is preferred. Further, 15% by mass or less is preferable because if so, sufficient mechanical strength can be maintained, and a member applied to the solid polymer fuel cell can be easily processed.

Preferable examples of the repeating unit represented by formula (1a) include a repeating unit represented by the following formula (1b):

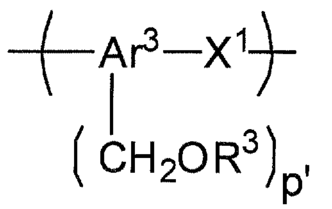

(1b)

wherein $Ar^3$ represents an optionally substituted aromatic group; $R^3$ has the same definition as described above; $X^1$ represents a direct bond or a divalent group; p' represents an integer 1 to 3; and when p' is 2 or more, the plurality of $R^3$'s may be the same as or different from each other.

The specific examples of $Ar^3$ include the same examples as the specific examples of the $Ar^2$.

Preferable examples of the repeating unit represented by formula (1a) include a repeating unit represented by the following formula (1c):

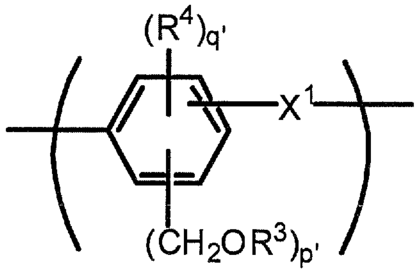

(1c)

wherein $R^3$, $X^1$, and p' have the same definitions as in formula (1a); $R^7$ represents a fluorine atom, an alkyl group having 1 to 20 carbon atoms, an alkoxy group having 1 to 20 carbon atoms, an aryl group having 6 to 20 carbon atoms, an

aryloxy group having 6 to 20 carbon atoms, an acyl group having 2 to 20 carbon atoms or an ion-exchange group; q' represents an integer of 0 to 3, the sum of p' and q' being 4 or less; and when q' is 2 or more, the plurality of $R^4$'s may be the same as or different from each other.

The typical examples of the repeating unit represented by formula (1c) include those described below:

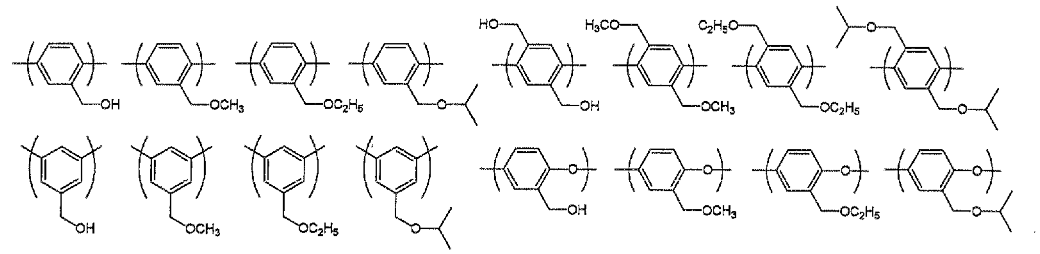

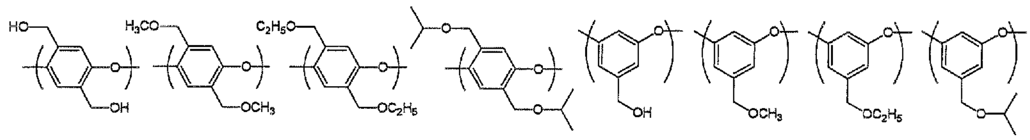

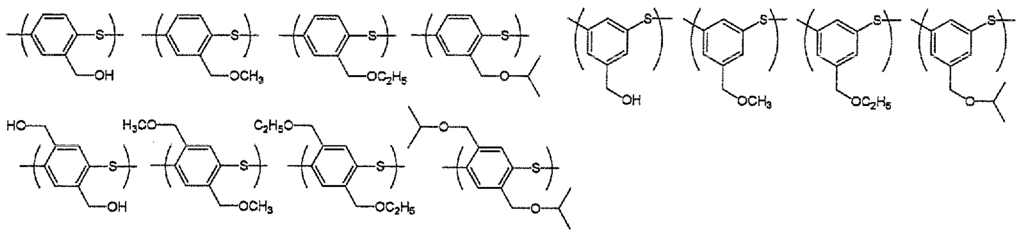

The block having the ion-exchange group preferably has a repeating unit represented by formula (1a) and a repeating unit represented by the following formula (7):

$$\left( Ar^4 - X^2 \right) \quad (7)$$

wherein $Ar^4$ represents an optionally substituted aromatic group, and at least one ion-exchange group bonds to $Ar^4$; and $X^2$ represents a direct bond or a divalent group.

Examples of the substituent of $Ar^4$ include an alkyl group having 1 to 20 carbon atoms, an alkoxy group having 1 to 20 carbon atoms, an aryl group having 6 to 20 carbon atoms, an aryloxy group having 6 to 20 carbon atoms, and an acyl group having 2 to 20 carbon atoms. The specific examples of the substituent include one described above. The specific examples of $Ar^4$ include the same examples as the specific examples of $Ar^2$. Examples of the divalent group include those described above.

More specifically, formula (7) is preferably a repeating unit selected from the following formulae (7a), (7b), (7c) and (7d):

$$\left[ Ar^{41} - Y^1 - Ar^{42} - Z^1 \right] \quad (7a)$$

$$-\!\!\left[\mathrm{Ar}^{43}-\mathrm{Y}^2-\mathrm{Ar}^{44}-\mathrm{Z}^2-\mathrm{Ar}^{45}\left(\mathrm{T}-\mathrm{Ar}^{46}\right)_{p''}\mathrm{Z}^2\right]\!\!- \quad (7b)$$

$$-\!\!\left[\left(\mathrm{Ar}^{47}\right)_{q''}\mathrm{Z}^3\left(\mathrm{Ar}^{48}\right)_{r}\mathrm{Z}^3\right]\!\!- \quad (7c)$$

$$-\!\!\left[\mathrm{Ar}^{49}\right]\!\!- \quad (7d)$$

wherein $Ar^{41}$ to $Ar^{49}$ each independently represent an aromatic group, the aromatic group may have at least one substituent selected from the group consisting of an alkyl group having 1 to 20 carbon atoms, an alkoxy group having 1 to 20 carbon atoms, an aryl group having 6 to 20 carbon atoms, an aryloxy group having 6 to 20 carbon atoms, and an acyl group having 2 to 20 carbon atoms; one or more selected from $Ar^{41}$ and $Ar^{42}$, one or more selected from $Ar^{43}$ to $Ar^{46}$, one or more selected from $Ar^{47}$ and $Ar^{48}$ , and $Ar^{49}$ each has an aromatic ring to which an ion-exchange group is directly bonded; $Y^1$ and $Y^2$ each independently represent any of a carbonyl group (-C(=O)-) or a sulfonyl group (-S(=O)$_2$-); $Z^1$, $Z^2$, and $Z^3$ each independently represent any of an oxygen atom (-O-) and a sulfur atom (-S-); T represents a direct bond or an optionally substituted methylene group; p" represents 0, 1 or 2; and q" and r each independently represent 1, 2 or 3.

In formulae (7a), (7b), (7c) and (7d), examples of the group represented by $Ar^{41}$ to $Ar^{49}$ include the same examples as the specific examples of $Ar^2$. Specific examples of an alkyl group having 1 to 20 carbon atoms, an alkoxy group having 1 to 20 carbon atoms, an aryl group having 6 to 20 carbon atoms, an aryloxy group having 6 to 20 carbon atoms, an acyl group having 2 to 20 carbon atoms or an ion-exchange group include examples described above. Specific examples of the ion-exchange group include examples described above.

Examples of the repeating unit include a compound having a structure described below. That is to say, for example, the structure represented by formula (7a) is preferably a structure represented by the following formulae 9-1 to 9-8. While a sulfonic acid group is provided as an example of the ion-exchange group in the formula, the ion-exchange group may be an ion-exchange group other than the sulfonic acid group.

9-1

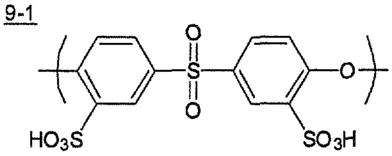

9-2

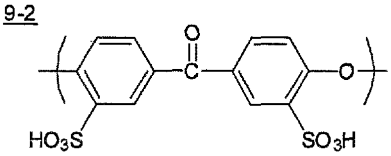

9-3

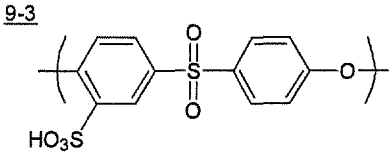

9-4

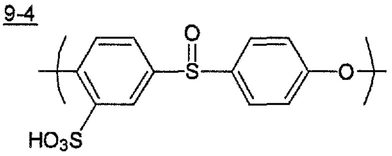

9-5

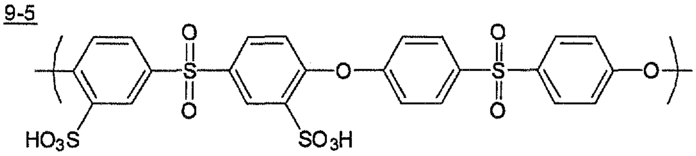

9-6

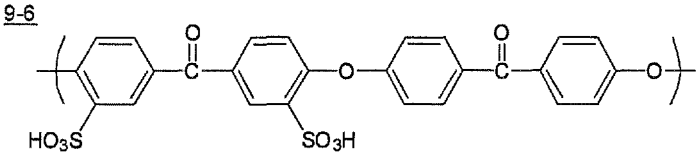

9-7

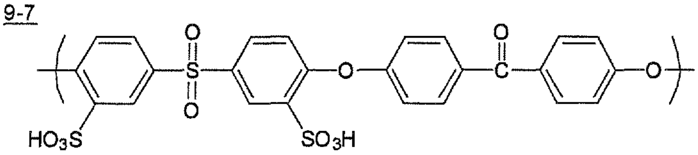

9-8

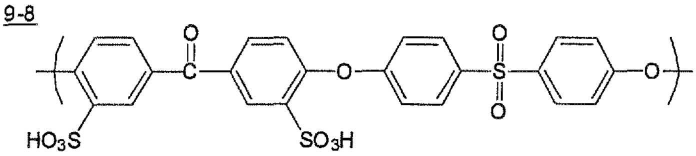

A structure represented by formula (7b) is preferably a structure represented by the following formulae 10-1 to 10-21. While a sulfonic acid group is represented as an ion-exchange group in the formula, the ion-exchange group may be an ion-exchange group other than the sulfonic acid group.

10-1

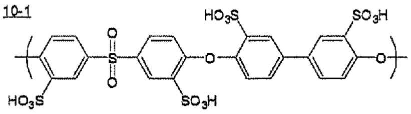

10-2

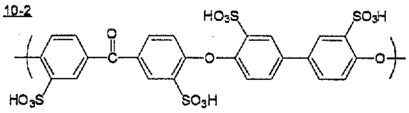

10-3

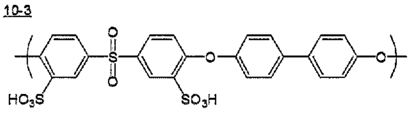

10-4

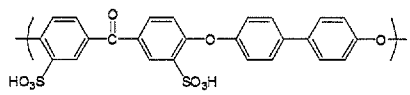

10-5

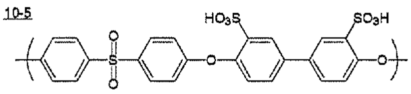

10-6

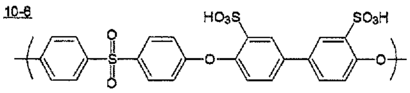

10-7

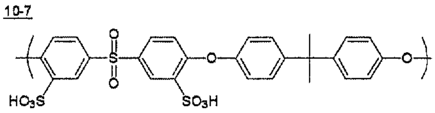

10-8

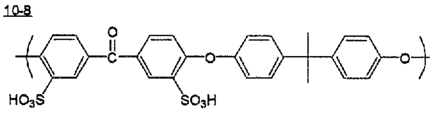

10-9

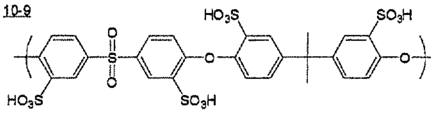

10-10

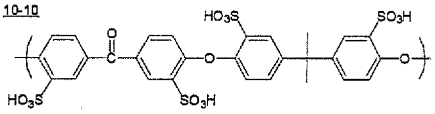

10-11

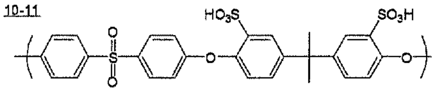

10-12

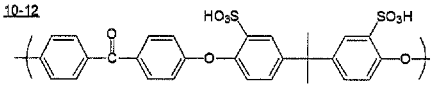

10-13

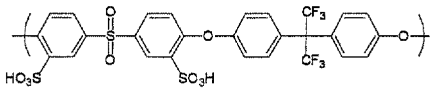

10-14

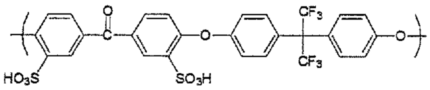

10-15

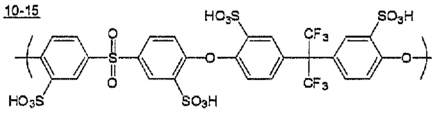

10-16

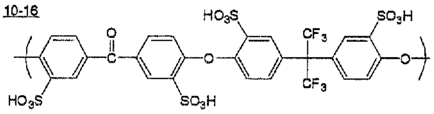

10-17

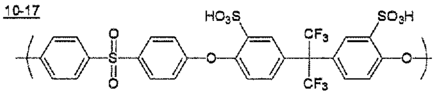

10-18

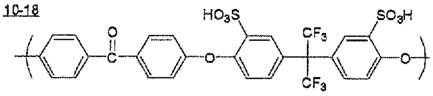

10-19

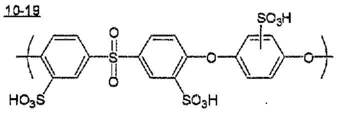

10-20

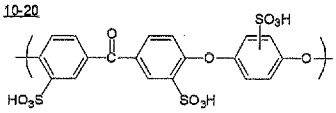

10-21

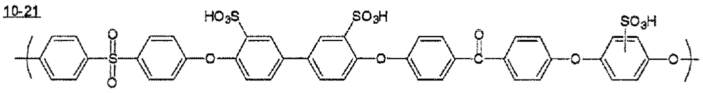

Examples of the structure represented by formula (7c) include a structure represented by the following formulae 11-1 to 11-10. While a sulfonic acid group is represented as an ion-exchange group in the formula, the ion-exchange group may be an ion-exchange group other than the sulfonic acid group.

11-1
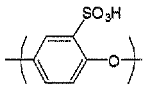
11-2
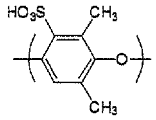
11-3
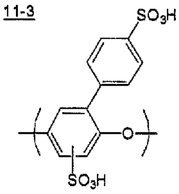
11-4
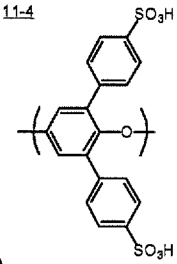
11-5
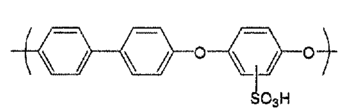
11-6
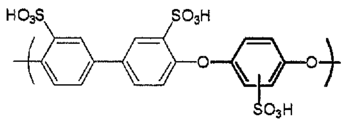
11-7
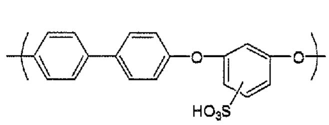
11-8
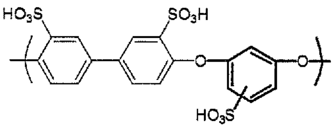
11-9
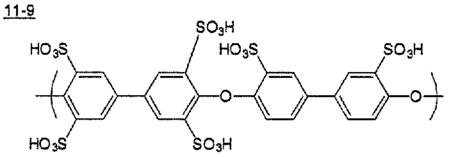
11-10
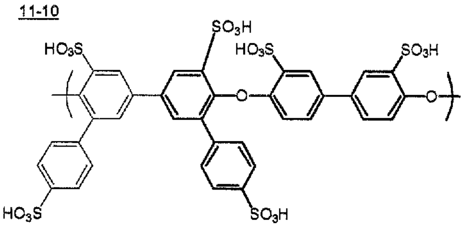

Further, examples of the structure represented by the formula (7d) include a structure represented by the following formula (12). While a sulfonic acid group is represented as an ion-exchange group in the formula, the ion-exchange group may be an ion-exchange group other than the sulfonic acid group.

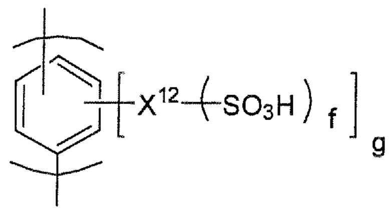
(12)

wherein $X^{12}$ represents a direct bond or an organic group, f represents an integer of from 1 to the number of the portions at which $X^{12}$ can be substituted, g represents 1 or 2, and when g is 2, two $X^{12}$'s, f and g may be the same as or different from each other.

When the group represented by $X^{12}$ is an organic group, $X^{12}$ is an organic group to which f sulfonic acid groups are bonded and may further have a substituent other than a sulfonic acid group. Examples of the organic group include an alkyl group having 1 to 20 carbon atoms, an alkoxy group having 1 to 20 carbon atoms, an aryl group having 6 to 20 carbon atoms, an aryloxy group having 1 to 20 carbon atoms or an acyl group having 2 to 20 carbon atoms. Examples of the group which an organic group may be substituted with include a halogen atom such as a fluorine atom, a chlorine atom, and a bromine atom; a hydroxyl group, a nitrile group, an amino group, a methoxy group, an ethoxy group, an isopropyloxy group, a phenyl group, and a phenoxy group. When g is 2 in the formula, two $X^{12}$'s may be the same as or different from each other.

The organic group represented by $X^{12}$ preferably contains one or more aromatic rings. In this case, it is preferred that the sulfonic acid group which is bonded to $X^{12}$ in formula (12) be bonded directly or through a prescribed group to the aromatic ring contained in $X^{12}$. When $X^{12}$ has a plurality of aromatic rings, a sulfonic acid group may be bonded to two or more aromatic rings among them. Examples of the aromatic ring include a benzene ring and a condensed ring (naphthalene ring, and the like).

When the group represented by $X^{12}$ is an organic group containing an aromatic ring, the structure represented by the formula (12) is preferably a structure represented by the following formula (13):

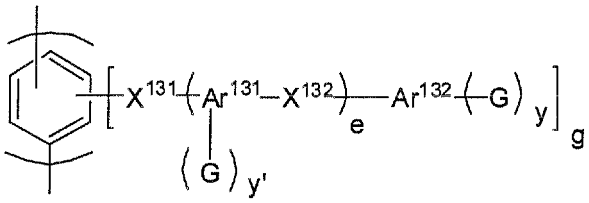

(13)

wherein $X^{131}$ and $X^{132}$ each independently represent a direct bond, an oxygen atom or a carbonyl group; $Ar^{131}$ and $Ar^{132}$ each independently represent an aromatic ring; G represents a group containing an ion-exchange group; e represents an integer of 0 to 3; y and y' each independently represent an integer of 0 to 3, the sum of y and y' being 1 or more; g has the same definition as described above; and when e is 2 or more, the plurality of $X^{131}$ may be the same as or different from each other and the plurality of $Ar^{132}$ may be the same as or different from each other.

A compound that has a structure where $X^{12}$ in the formula (12) is a direct bond is also preferred as the polymer compound represented by the formula (12). Such a structure is specifically represented by the following formula (14):

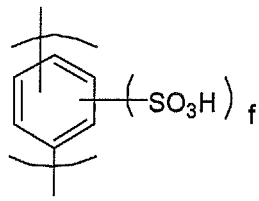

(14)

wherein f has the same definition as that described above. Further, specific examples of a group G containing a sulfonic acid group in the formula (13) include a group represented by the following formulae (19a) to (19f):

$-(CH_2)_b-SO_3H$ (19a) $-(CF_2)_b-SO_3H$ (19b) $-(CH_2)_b-O-(CH_2)_{b'}-SO_3H$ (19c)

$-(CF_2)_b-O-(CF_2)_{b'}-SO_3H$ (19d) $-X^{19}-(CH_2)_b-SO_3H$ (19e) $-X^{19}-(CF_2)_b-SO_3H$ (19f)

wherein $X^{19}$ represents an oxygen atom, a sulfur atom, a carbonyl group or a sulfonyl group, and b and b' each independently represents an integer of 0 to 12.

Specific examples of the structural unit forming a compound having the structure represented by the formula (12) include a compound represented by the following formulae 20-1 to 20-11. Among the following formulae, G, y and y' have the same definitions as those described above, and y and y' are each preferably 1 to 3. y" represents an integer of 0 to 2.

20-1

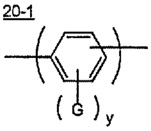

20-2

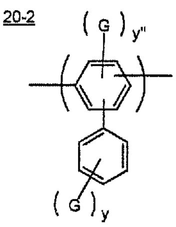

20-3

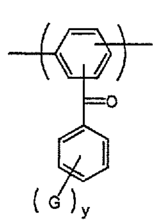

20-4

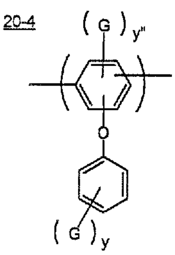

20-5

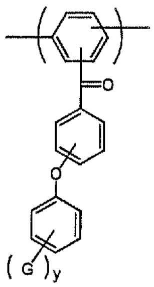

20-6

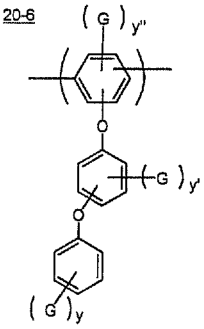

20-7

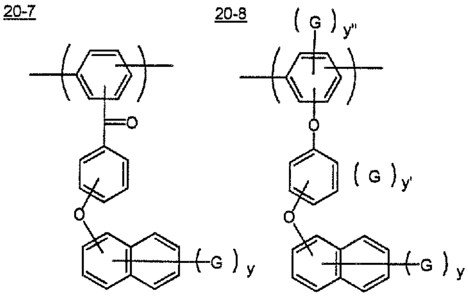

20-8

20-9

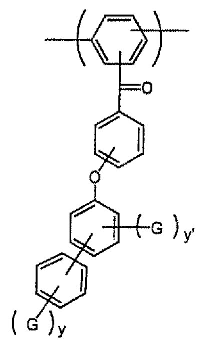

20-10

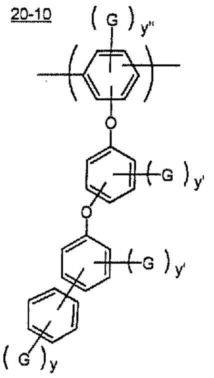

20-11

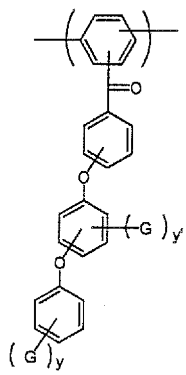

The block having substantially no ion-exchange groups preferably has a repeating unit represented by the following formula (8):

$$-\left(Ar^5-X^3\right)- \qquad (8)$$

wherein $Ar^5$ represents an optionally substituted aromatic group and $X^3$ represents a direct bond or a divalent group.

Examples of the substituent which $Ar^5$ may have include an alkyl group having 1 to 20 carbon atoms, an alkoxy group having 1 to 20 carbon atoms, an aryl group having 6 to 20 carbon atoms, an aryloxy group having 6 to 20 carbon atoms, and an acyl group having 2 to 20 carbon atoms. The specific examples of the substituent include those described above. The specific examples of $Ar^5$ include the same examples as the specific examples of $Ar^2$. Examples of the divalent group include those described above.

More specifically, formula (8) is preferably a repeating unit selected from the following formulae (8a), (8b), (8c) and (8d):

$$-\left[Ar^{51}-Y^1-Ar^{52}-Z^1\right]- \qquad (8a)$$

$$-\left[Ar^{53}-Y^2-Ar^{54}-Z^2-Ar^{55}\left(T-Ar^{56}\right)_{p'''}Z^2\right]- \qquad (8b)$$

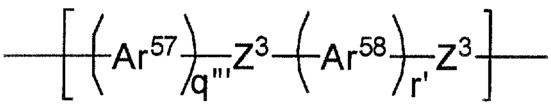

(8c)

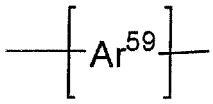

(8d)

wherein $Ar^{51}$ to $Ar^{59}$ each independently represent an aromatic group, the aromatic group may have an alkyl group having 1 to 20 carbon atoms, an alkoxy group having 1 to 20 carbon atoms, an aryl group having 6 to 20 carbon atoms, an aryloxy group having 6 to 20 carbon atoms, or an acyl group having 2 to 20 carbon atoms; $Y^1$ and $Y^2$ each independently represent any of a carbonyl group (-C(=O)-) or a sulfonyl group ($-S(=O)_2-$); $Z^1$, $Z^2$, and $Z^3$ each independently represent any of an oxygen atom (-O-) and a sulfur atom (-S-); T represents a direct bond or an optionally substituted methylene group; p''' represents 0, 1 or 2; and q''' and r' each independently represent 1, 2 or 3.

In formulae (8a), (8b), (8c) and (8d), examples of the group represented by $Ar^{51}$ to $Ar^{59}$ include the same examples as the specific examples of $Ar^2$. Specific examples of an alkyl group having 1 to 20 carbon atoms, an alkoxy group having 1 to 20 carbon atoms, an aryl group having 6 to 20 carbon atoms, an aryloxy group having 6 to 20 carbon atoms, an acyl group having 2 to 20 carbon atoms or an ion-exchange group include examples described above.

The amount of halogen atoms which exist in the polymer electrolyte of the present invention is preferably 15% by mass or less based on total mass of the polymer electrolyte, and more preferably no halogen atoms are contained. Examples of the halogen include fluorine, chlorine, bromine and iodine.

The amount of the ion-exchange groups which exist in the polymer electrolyte of the present invention is preferably 0.5 meq/g to 6.0 meq/g, more preferably 0.8 meq/g to 5.0 meq/g, and still more preferably 0.8 meq/g to 4.0 meq/g in terms of ion-exchange capacity. It is preferable that the ion-exchange capacity, which signifies the amount of the ion-exchange groups, be 0.5 meq/g or more in a member relating to a solid polymer fuel cell, such as an ion conductive membrane, because if so, ion conductivity is more increased. On the other hand, it is preferable that an ion-exchange capacity, which signifies the introduction amount of the ion-exchange groups, be 6.0 meq/g or less because if so, water resistance becomes better. A method of measuring the ion-exchange capacity includes the following method.

<Measurement of Ion-Exchange Capacity>

The polymer electrolyte to be provided for measurement is formed into a membrane by a solution casting method and is used as a polymer electrolyte membrane, and is washed with acid, and thereby an ion-exchange group is converted into a free acid type. The formed polymer electrolyte membrane is cut so as to have a suitable mass, and the dry mass of the cut polymer electrolyte membrane is measured. Subsequently, the membrane is immersed in aqueous sodium hydroxide solution and a free acid type ion-exchange group is neutralized. Then, hydrochloric acid is added gradually to a solution in which the polymer electrolyte membrane is immersed, titration is performed to determine a neutralization point, the amount of residual sodium hydroxide is determined from an amount of hydrochloric acid necessary for the neutralization, and the ion-exchange capacity (unit: meq/g) of the polymer electrolyte is calculated from the dry mass of the used polymer electrolyte membrane (the cut polymer electrolyte membrane).

Polystyrene-equivalent weight average molecular weights or polyglycol-equivalent weight average molecular weights, determined by GPC (gel permeation chromatography), of the polymer electrolyte to be used in the present invention is usually about 1,000 to 1,000,000, and preferably about 5,000 to 500,000.

Examples of the production method of the polymer electrolytes of the present invention include the following method (A) or (B).

(A) A method of synthesizing a precursor polymer from which a block having an ion-exchange group will be derived and a precursor polymer from which a block having substantially no ion-exchange groups will be derived, respectively, then copolymerizing the obtained precursor polymers with each other to obtain a block copolymer.

(B) A method of synthesizing one of a precursor polymer from which a block having an ion-exchange group will be derived and a precursor polymer from which a block having substantially no ion-exchange groups will be derived, then allowing coexistence of the other precursor polymer in the synthesis system, that is, while synthesizing one precursor polymer, copolymerizing one precursor polymer and the other precursor polymer to obtain a block copolymer.

In the (A) method, copolymerization of a precursor polymer from which a block having an ion-exchange group will be derived and a precursor polymer from which a block having substantially no ion-exchange groups will be derived can be carried out by (A-1) condensation reaction of a precursor polymer from which a block having an ion-exchange group will be derived and a precursor polymer from which a block having substantially no ion-exchange groups will be derived, or (A-2) a method of bonding a precursor polymer from which a block having an ion-exchange group and a precursor polymer from which a block having substantially no ion-exchange groups will be derived through a compound functioning as a linkage group.

Examples of (A-1) method include one represented below. In other words, a polymer having a hydroxyl group at the end is used as a precursor polymer from which a block having an ion-exchange group will be derived, a polymer having a halogeno group at the end is used as a precursor polymer from which a block having substantially no ion-exchange groups will be derived and these are condensed by nucleophilic substitution in the presence of a base catalyst. Further, a polymer having a halogeno group at the end is used as a precursor polymer from which a block having an ion-exchange group will be derived, a polymer having a hydroxyl group at the end is used as a precursor polymer from which a block having substantially no ion-exchange groups will be derived and these are condensed by nucleophilic substitution in the presence of a base catalyst.

A polymer having a hydroxyl group at one end and having a halogeno group at the other end is used as a precursor polymer from which a block having an ion-exchange group will be derived and a precursor polymer from which a block having substantially no ion-exchange groups will be derived and these are condensed by nucleophilic substitution in the presence of a base catalyst.

Further, a polymer having a halogeno group at the end is used as a precursor polymer from which a block having an ion-exchange group will be derived and a precursor polymer from which a block having substantially no ion-exchange groups will be derived and these are coupled in the presence of a zero-valent transition metal catalyst.

On the other hand, as the (A-2) method, a polymer having a hydroxyl group at the end is used as a precursor polymer from which a block having an ion-exchange group will be derived and a precursor polymer from which a block having substantially no ion-exchange groups will be derived, and these are bonded through a compound capable of forming a linkage group by the condensation reaction, such as 4,4'-difluorobenzophenone, decafluorobiphenyl, hexafluorobenzene and 4,4'-difluorodiphenylsulfone, with each of the polymers.

A polymer having a halogeno group at the end is used as a precursor polymer from which a block having an ion-exchange group will be derived and a precursor polymer from which a block having substantially no ion-exchange groups will be derived, and these are bonded through a compound capable of forming a linkage group by the condensation reaction, such as 4,4'-dihydroxybiphenyl, bisphenol A, 4,4'-dihydroxybenzophenone and 4,4'-dihydroxydiphenylsulfone, with each of the polymers.

Further, when a precursor polymer from which a block having an ion-exchange group will be derived and a precursor polymer from which a block having substantially no ion-exchange groups will be derived are bonded through a linkage group as the (A-2) method, as a compound forming the linkage group, a tri- or more-functional compound, for example, a polyfunctional compound such as decafluorobiphenyl and hexafluorobenzene can be used, and a block copolymer having a branched structure can be synthesized by suitably controlling the reaction conditions. In this case, a block copolymer having a linear structure and a block copolymer having a branched structure can be produced selectively by changing the charging composition of a precursor polymer from which a block having an ion-exchange group will be derived and a precursor polymer from which a block having substantially no ion-exchange groups will be derived.

More specifically, examples of the (B) method include methods described below. (B-1) A method where in the presence of any one of a polymer having a hydroxyl group at the end as a precursor polymer from which a block having an ion-exchange group will be derived and a polymer having a hydroxyl group at the end as a precursor polymer from which a block having substantially no ion-exchange groups will be derived, a monomer having a halogeno group at both ends and a monomer having a hydroxyl group at both ends are condensed by nucleophilic substitution with a base catalyst, which produces the other polymer.

(B-2) A method where in the presence of any one of a polymer having a hydroxyl group at the end as a precursor polymer from which a block having an ion-exchange group will be derived and a polymer having a hydroxyl group at the end as a precursor polymer from which a block having substantially no ion-exchange groups will be derived, monomers each having both a halogeno group and a hydroxyl group, are condensed by nucleophilic substitution with a base catalyst, which derives the other polymer.

(B-3) A method where in the presence of any one of a polymer having a halogeno group at the end as a precursor polymer from which a block having an ion-exchange group will be derived and a polymer having a halogeno group at the end as a precursor polymer from which a block having substantially no ion-exchange groups will be derived, a monomer having a halogeno group at both ends and a monomer having a hydroxyl group at both ends are condensed by nucleophilic substitution with a base catalyst, which derives the other polymer.

(B-4) A method where in the presence of any one of a polymer having a halogeno group at the end as a

precursor polymer from which a block having an ion-exchange group will be derived and a polymer having a halogeno group at the end as a precursor polymer from which a block having substantially no ion-exchange groups will be derived, monomers each having both a halogeno group and a hydroxyl group, are condensed by nucleophilic substitution with a base catalyst, which derives the other polymer.

(B-5) A method where in the presence of any one of a polymer having a halogeno group at the end as a precursor polymer from which a block having an ion-exchange group will be derived and a polymer having a halogeno group at the end as a precursor polymer from which a block having substantially no ion-exchange groups will be derived, monomers having a halogeno group at both ends are coupled in the presence of a zero-valent transition metal catalyst, which derives the other polymer.

As described above, a precursor polymer from which a block having an ion-exchange group will be derived and a precursor polymer from which a block having substantially no ion-exchange groups will be derived are reacted, and a block copolymer which has a block having an ion-exchange group and a crosslinkable substituent, and a block having substantially no ion-exchange groups is obtained.

For example, the precursor polymer from which the block having an ion-exchange group will be derived can be produced by copolymerizing a monomer from which a structural unit represented by formula (1a) will be derived and a monomer from which a structural unit having an ion-exchange group will be derived.

For example, the monomer from which a repetition structural unit represented by formula (1a) will be derived is used as the monomer represented by formula (1a'):

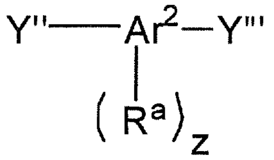

(1a')

wherein $Ar^2$, $R^a$, and z have the same definitions as the formula (1a) described above; and Y" and Y'" each independently represents a leaving group or a nucleophilic group.

Herein, the leaving group is a group selected from the group consisting of a halogeno group and $-OSO_2D$ (herein, D represents an alkyl group, a fluorine-substituted alkyl group, or an aryl group) and examples of the nucleophilic group include a hydroxyl group or a mercapto group.

Further, examples of the monomer from which a structural unit having an ion-exchange group will be derived include monomers represented by the following formula (7'):

$$Q^{1'}\text{-}L^{1b}\text{-}Q^{2'} \qquad (7')$$

wherein $L^{1b}$ represents a structure having an ion-exchange group or a structure capable of introducing an ion-exchange group, and $Q^{1'}$ and $Q^{2'}$ each independently represents a nucleophilic group or a leaving group.

Examples of the monomer from which a structural unit having the ion-exchange group will be derived include the following formulae 21-1 to 21-11, 22-1 to 22-4 and 23-1 to 23-4. In the following formulae, U represents an ion-exchange group, and v and v' each independently represents an integer of 0 to 3, the sum of v and v' being the number of 1 or more. Further, it is preferred that v and v' each independently represents an integer of 1 to 3. v" is an integer of 0 to 2. $Q^{1'}$ and $Q^{2'}$ each have the same definition as described above. Examples of the structure capable of introducing the ion-exchange group include monomers excluding an ion-exchange group from monomers represented by the following formulae 21-1 to 21-11 and 22-1 to 22-4.

21-1

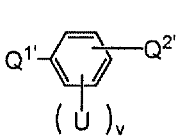

21-2

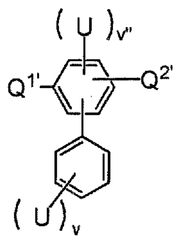

21-3

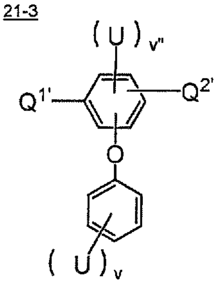

21-4

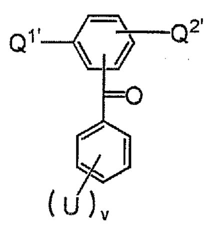

21-5

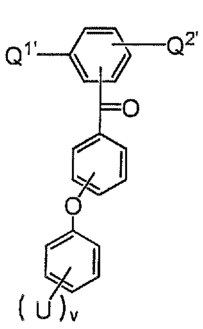

21-6

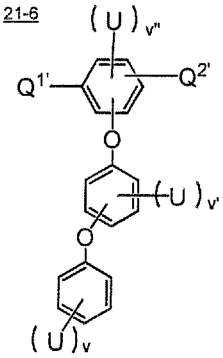

21-7

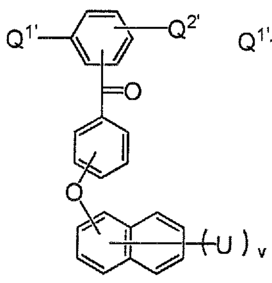

21-8

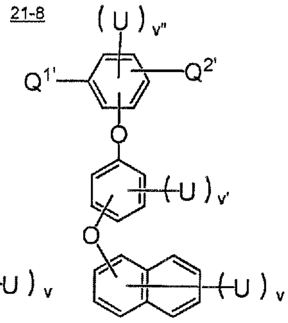

21-9

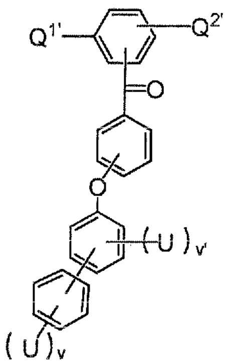

21-10

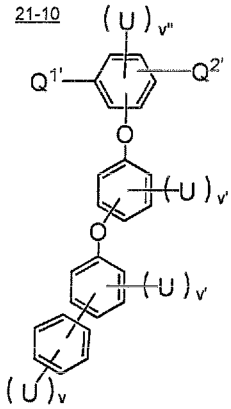

21-11

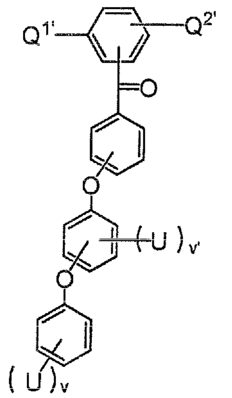

22-1

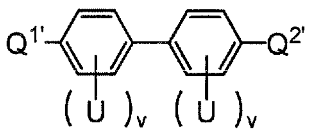

22-2

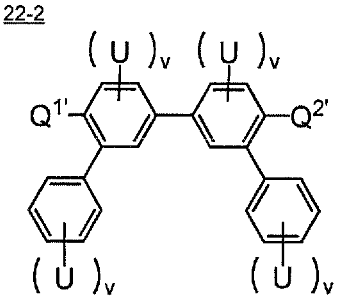

22-3

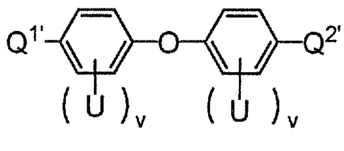

22-4

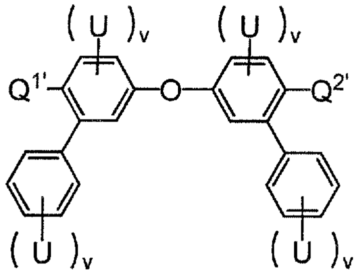

23-1

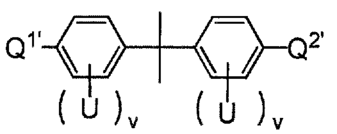

23-2

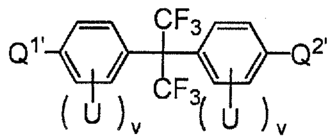

23-3

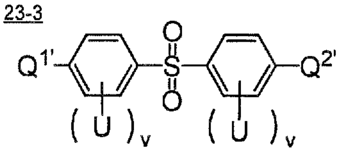

23-4

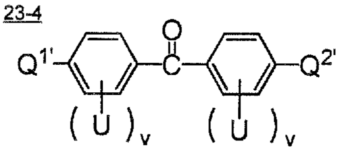

Examples of a method of obtaining the precursor polymer from which a block having an ion-exchange group will be derived include: when a monomer where both Y" and Y"' in the formula (1a') are leaving groups and a monomer where both $Q^{1'}$ and $Q^{2'}$ in the formula (7') are leaving groups are copolymerized, coupling them in the presence of a zero-valent transition metal catalyst to form a single bond; or, when a monomer where both Y" and Y"' in the formula (1a') are leaving groups and a monomer where both $Q^{1'}$ and $Q^{2'}$ in the formula (7') are leaving groups are copolymerized, copolymerizing them through condensation reaction of a leaving group and a nucleophilic group to form an ether or a thioether bond.

In copolymerization by condensation reaction, a monomer where both Y" and Y"' in the formula (1a') are nucleophilic groups and a monomer where both $Q^{1'}$ and $Q^{2'}$ in the formula (7') are nucleophilic groups may be combined and a monomer where Y" is a leaving group and Y"' is a nucleophilic group in the formula (1a') and a monomer where $Q^{1'}$ is a leaving group and $Q^{2'}$ is a nucleophilic group in the formula (7') may be combined.

At first, the coupling method in the presence of a zero-valent transition metal catalyst will be described.

Examples of the zero-valent transition metal complex include zero-valent nickel complexes, zero-valent palladium complexes, zero-valent platinum complexes and zero-valent copper complexes. Among transition metal complexes, zero-valent nickel complexes and zero-valent palladium complexes are preferably used, and zero-valent nickel complexes are more preferably used. Herein, the zero-valent transition metal complexes may be a commercial product or previously prepared to be used in the polymerization reaction system, or may be generated in the polymerization reaction system from a transition metal compound with a reductant. The latter case can be conducted by, for example, reacting the transition metal compound with the reductant.

In any case, the ligand described below is preferably added from the viewpoint of increased yield.

Examples of the zero-valent palladium complex include tetrakis(triphenylphosphine)palladium(0). Examples of the zero-valent nickel complex include bis(cyclooctadiene)nickel(0), (ethylene)bis(triphenylphosphine)nickel(0) and tetrakis(triphenylphosphine)nickel(0). Among them, bis(cyclooctadiene)nickel(0) is preferably used.

In the case of reacting the transition metal compound with the reductant to generate a zero-valent transition metal complex, the transition metal compound used is usually a divalent transition metal compound. However, a zero-valent transition metal compound can be also used. Among them, divalent nickel compounds and divalent palladium compounds are preferred. Examples of the divalent nickel compound include nickel chloride, nickel bromide, nickel iodide, nickel acetate, nickel acetylacetonate, bis(triphenylphosphine) nickel chloride, bis(triphenylphosphine)nickel bromide and bis(triphenylphosphine)nickel iodide. Examples of the divalent palladium compound include palladium chloride, palladium bromide, palladium iodide and palladium acetate.

Examples of the reductant include metals such as zinc and magnesium, alloys such as these metals with copper, sodium hydride, hydrazine and derivatives thereof, and lithium aluminum hydride. Those can be used together with ammonium iodide, trimethylammonium iodide, triethylammonium iodide, lithium iodide, sodium iodide and potassium iodide, if necessary.

An amount of zero-valent transition metal complex used is, when the reductant is not used, in molar terms usually 0.1 to 5.0 times the total mole amount of the monomer represented by the formula (1a') and the monomer represented by the formula (7'). Using a too small amount tends to result in a product of lower molecular weight, and thus the amount used is in molar terms preferably 1.5 times or more, more preferably 1.8 times or more, and even more preferably 2.1 times or more. The upper limit of the amount used is in molar terms desirably 5.0 times or less, since using a too large amount tends to require a complicated post-processing.

When the reductant is used, an amount of the transition metal compound used is in molar terms 0.01 to 1 times the total mole amount of the monomer represented by the formula (1a') and the monomer represented by the formula (7'). Using a too small amount tends to result in the obtained polymer electrolyte being of lower molecular weight, and

thus the amount used is in molar terms preferably 0.03 times or more. The upper limit of the amount used is in molar terms desirably 1.0 times or less, since using a too large amount tends to require a complicated post-processing.

An amount of reductant used is in molar terms usually 0.5 to 10 times the total mole amount of the monomer represented by the formula (1a') and the monomer represented by the formula (7'). Using a too small amount tends to result in the obtained polymer electrolyte being of lower molecular weight, and thus the amount used is preferably 1.0 molar time or more. The upper limit of the amount used is desirably 10 molar times or less, since using a too large amount tends to require a complicated post-processing.

Examples of the ligand include 2,2'-bipyridyl, 1,10-phenanthroline, methylenebisoxazoline, N,N,N',N'-tetramethylethylenediamine, triphenylphosphine, tritolylphosphine, tributylphosphine, triphenoxyphosphine, 1,2-bisdiphenylphosphinoethane and 1,3-bisdiphenylphosphinopropane. From the points of versatility, low cost, high reactivity and high yield, triphenylphosphine and 2,2'-bipyridyl are preferred. Since a combination of bis(1,5-cyclooctadiene)nickel(0) with 2,2'-bipyridyl increases a yield of polymer, the combination is particularly preferably used.

When the ligand coexists, an amount of the ligand used is usually in molar terms about 0.2 to about 10 times, and preferably about 1.0 to about 5.0 times the zero-valent transition metal complex based on the metal atom.

The coupling reaction is usually conducted in the presence of a solvent. Examples of the solvent include aprotic polar solvents such as N,N-dimethylformamide (DMF), N,N-dimethylacetamide (DMAc), N-methyl pyrrolidone (NMP), dimethyl sulfoxide (DMSO) and hexamethylphosphoric triamide; aromatic hydrocarbon solvents such as toluene, xylene, mesitylene, benzene, and n-butylbenzene; ether solvents such as tetrahydrofuran, 1,4-dioxane, dibutyl ether, and tert-butyl methyl ether; ester solvents such as ethyl acetate, butyl acetate and methyl benzoate; and halide solvents such as chloroform and dichloroethane. Further, the abbreviation of the solvent is denoted in parenthesis and the abbreviation may be sometimes used in the following description. In order to increase a molecular weight of a produced polymer, a solvent sufficiently dissolving the polymer, or the like, that is, a good solvent for the polymer is preferably used. As the good solvent for the produced polymer, tetrahydrofuran, 1,4-dioxane, DMF, DMAc, NMP, DMSO, and toluene are preferred. They may be used in mixture of two or more of them. Among solvents, a solvent selected from DMF, DMAc, NMP and DMSO and a mixed solvent of two or more of them are preferably used. Further, the "good solvent" means a solvent that can dissolve 5 g or more polymer electrolyte in 100 g of the solvent at 25 °C.

The solvent is usually used in weight terms in a range of 5 to 500 times, and preferably 20 to 100 times the total weight of the monomer represented by the formula (1a') and the monomer represented by the formula (7').

A reaction temperature is usually within the range from 0°C to 250°C, and preferably about 10°C to about 100°C. A condensation time is usually about 0.5 to about 24 hours. In order to increase a molecular weight of produced polymer, it is particularly preferred to react the zero-valent transition metal complex, the monomer represented by the formula (1a') and the monomer represented by the formula (7') at a temperature of 45°C or higher. A preferred reaction temperature is usually 45°C to 200°C, and preferably about 50°C to about 100°C.

The method of reacting the zero-valent transition metal complex, the monomer represented by the formula (1a') and the monomer represented by the formula (7') may be an operation of adding one to the other, or an operation of adding them simultaneously to a reactor. They may be added all at once, but preferably portionwise in terms of exothermic heat. Addition under the coexistence of a solvent is also preferred. A mixture thus obtained is held at a temperature of usually about 45°C to about 200°C, and preferably about 50°C to about 100°C.

Next, the polymerization method through condensation reaction of a leaving group with a nucleophilic group is described.

The condensation reaction is a condensation reaction occurring between a leaving group and a nucleophilic group as described above. It is usually condensed with a nucleophilic substitution in the presence of a basic catalyst.

Examples of the basic catalyst include sodium hydroxide, potassium hydroxide, cesium hydroxide, sodium carbonate, potassium carbonate, cesium carbonate, sodium hydrogen carbonate and potassium hydrogen carbonate. The basic catalyst is not specifically limited as far as it can convert a hydroxyl group and a mercapto group, which are nucleophilic groups, into an alcoholate group and a thiolate group, respectively.

The condensation reaction is usually conducted in the presence of a solvent. Examples of the solvent include aprotic polar solvents such as DMF, N, DMAc, NMP, DMSO and hexamethylphosphoric triamide; aromatic hydrocarbon solvents such as toluene, xylene, mesitylene, benzene, and n-butylbenzene; ether solvents such as tetrahydrofuran, 1,4-dioxane, dibutyl ether, and tert-butyl methyl ether; ester solvents such as ethyl acetate, butyl acetate and methyl benzoate; and halide solvents such as chloroform and dichloroethane.

In order to increase a molecular weight of a produced polymer, a solvent sufficiently dissolving a polymer, or the like, that is, a good solvent for a polymer is preferably used. As the good solvent for the produced polymer or the like, tetrahydrofuran, 1,4-dioxane, DMF, DMAc, NMP, DMSO, and toluene, are preferred. They may be used in mixture of two or more of them. Among solvents, a solvent selected from DMF, DMAc, NMP and DMSO, or mixed solvents of two or more of them are preferably used. In some cases, water is generated as a byproduct during the condensation reaction. In this case, the water can be removed from the reaction system as an azeotropic mixture by adding toluene or the like added to the reaction system, irrespective of polymerization solvent. Although the amount of the solvent is

not specifically limited, the produced polymer and the like is difficult to recover with too low concentration, further, stirring is difficult with too high concentration. Therefore, it is preferred that the amount of the solvent used is determined so as to be 1 to 999 parts by weight, preferably 3 to 199 parts by weight, with respect to the monomer (monomer selected from the monomer represented by the formula (1a') and monomer represented by the formula (7')) used in the preparation of polymer and the like.

A condensation reaction can be carried out within the range from 0°C to 350°C, and preferably from 50°C to 250°C. At a temperature lower than 0°C, it is difficult for the reaction to sufficiently progress, and at higher than 350°C, a polymer may be decomposed.

Examples of a method of introducing an ion-exchange group in the precursor polymer from which a block having an ion-exchange group will be derived include both a method of adding an ion-exchange group to the precursor polymer obtained by polymerization and a method of using monomers before forming the precursor polymer, which have an ion-exchange group.

Examples of the method of introducing a sulfonic acid group by the former method include a method where the synthesized precursor polymer is dissolved or suspended in concentrated sulfuric acid or fuming sulfuric acid, or the compound is at least partially dissolved in an organic solvent, followed by reacting concentrated sulfuric acid, chlorosulfuric acid, fuming sulfuric acid or sulfur trioxide, or the like thereto.

For example, a method of obtaining the precursor polymer from which a block having substantially no ion-exchange groups will be derived can be prepared by polymerizing monomers from which a structural unit having no ion-exchange groups will be derived.

Examples of the monomer from which a structural unit having substantially no ion-exchange groups will be derived include monomers represented by the following formula (8'):

$$Q^{3'}\text{-}L^{2b}\text{-}Q^{4'} \qquad (8')$$

wherein $L^{2b}$ is a structure having no ion-exchange groups, and $Q^{3'}$ and $Q^{4'}$ each independently represents a nucleophilic group or a leaving group.

Herein, the leaving group is a group selected from the group consisting of a halogeno group and $-OSO_2D'$ (herein, D' represents an alkyl group, a fluorine-substituted alkyl group or an aryl group) and examples of the nucleophilic group include a hydroxyl group or a mercapto group.

Further, examples of the monomer from which a structural unit having no ion-exchange groups will be derived include monomers excluding an ion-exchange group from monomers represented by the formulae 21-1 to 21-11, 22-1 to 22-4 and 23-1 to 23-4.

The precursor polymer from which a block having substantially no ion-exchange groups will be derived can be prepared by the same production method as the aforementioned method for the production of the precursor polymer from which a structural unit having an ion-exchange group will be derived.

<Method of Purification of Polymer Electrolyte>

The block copolymer thus obtained can be collected from the reaction mixture by conventional methods. For example, the product is precipitated by adding a poor solvent in which the polymer electrolyte is insoluble or hardly soluble and a target material can be collected by filtration or the like. The product can be further purified by washing with water or repeating reprecipitation with a good solvent and a poor solvent, if necessary. Purification can be also carried by a combination of two or more means selected from the means described above. As used herein, the "poor solvent" means a solvent that cannot dissolve 1 g or more of polymer electrolyte in 100 g of solvent at 25°C.

Next, the crosslinked polymer electrolyte of the present invention will be described.

The crosslinked polymer electrolyte of the present invention can be produced by subjecting the polymer electrolyte to heat treatment at a temperature of 50 to 300°C or to light treatment at an irradiation amount of from 1,000 to 30,000 $mJ/cm^2$. Whether the polymer electrolyte has been crosslinked or not can be determined on the basis of whether or not the polymer electrolyte after the treatment is dissolved in a solvent where the polymer electrolyte before the treatment is dissolved. Examples of the solvent include solvents used in a solvent casting method described below. When the polymer electrolyte after the treatment is dissolved, the polymer electrolyte is determined not to be crosslinked. When the polymer electrolyte after the treatment is not dissolved, the polymer electrolyte is determined to be crosslinked ("Essential Kobunshi Kagaku" (Essential Polymer Science), Nakahama Seiichi, published by Kodansha LTD., first edition, pp. 59-60, April 1988). Herein, not dissolving the polymer electrolyte means that the polymer electrolyte is used as a polymer electrolyte membrane which is immersed in the solvent at 25°C to maintain a form of a membrane.

The temperature of heat treatment is preferably 80°C or higher and more preferably 100°C or higher from the viewpoint of increasing the reactivity of a reactive group; and it is preferably 280°C or lower, and more preferably 250°C or lower, from the viewpoint of preventing deterioration of the polymer electrolyte. The heating time is usually 1 minute

to 10 hours, preferably 3 minutes to 7 hours and still more preferably 5 minutes to 5 hours. The atmosphere for subjecting to heat treatment is preferably under air, under vacuum, or under inactive gas such as nitrogen gas.

Examples of light sources for light treatment are not specifically limited, and usually light sources which can irradiate light in a range of ultraviolet light or visible light are suitable. Specifically, examples of light sources include a low pressure mercury lamp, a high pressure mercury lamp, a xenon lamp, and a metal halide lamp. Further, while an irradiation amount depends on the wavelength of light, structure of the polymer electrolyte irradiated, content of the polymer electrolyte, crosslinked temperature and membrane thickness, or the like, it is usually from 1,000 to 30,000 mJ/$cm^2$, and preferably 5,000 to 20,000 mJ/$cm^2$. An irradiation time is 1 second to 100 hours. The atmosphere for subjecting to light treatment is preferably under air, under vacuum or under an inert gas atmosphere such as nitrogen gas.

When heat treatment is carried out, an acid catalyst is preferably added from the viewpoint of increasing reactivity of a reactive group. As the acid catalyst, generally an acidic compound can be widely used, preferably a sulfonic acid compound, a carboxylic acid compound, a boronic acid compound, a phosphoric acid compound, hydrochloric acid, sulfuric acid, nitric acid, more preferably a sulfonic acid compound, particularly preferably methanesulfonic acid, ethanesulfonic acid, trifluoromethanesulfonic acid, or pentafluoroethanesulfonic acid.

Although the amount of acid catalyst is not specifically limited, for example, it is preferably 0.0050 to 0.50 (g/g), more preferably 0.010 to 0.30 (g/g) and still more preferably 0.020 to 0.20 (g/g) in terms of (mass of acid catalyst)/(mass of polymer electrolyte).

When the polymer electrolyte has an acidic group such as a sulfonic acid group as an ion-exchange group, if a portion of the polymer electrolyte is a free acid group, the polymer electrolyte itself can function as an acid catalyst. In this case, even when other acid catalysts are not added, the same effect can be obtained, and thus this is preferred.

In order to allow such a polymer electrolyte itself to act as an acid catalyst, the free acid group is preferably 10% by mass or more, and more preferably 50% by mass or more with respect to total amount of the ion-exchange group.

As a method of adding the acid catalyst, for example, when a membrane is formed by a solution casting method described later, the polymer electrolyte and the acid catalyst are dissolved together in a solvent to form a membrane and the obtained membrane is subjected to heat treatment.

The crosslinked polymer electrolyte of the present invention is different from known polymer electrolytes to be crosslinked by reacting an ion-exchange group and it is presumed that the polymer electrolyte is crosslinked by reacting crosslinkable substituents with each other and/or a crosslinkable substituent and an aromatic ring contained in the polymer electrolyte. Therefore, even though the obtained polymer electrolyte is crosslinked, it is different from conventional polymer electrolytes crosslinked by reacting ion-exchange groups and proton conductivity is not reduced to a large extent.

Further, when ion-exchange capacity of the crosslinked polymer electrolyte of the present invention is denoted by A (meq/g) and ion-exchange capacity of the polymer electrolyte before the crosslinking to form the crosslink polymer electrolyte is denoted by B (meq/g), it is preferred that the relations of the following formulae (1') and (2') are satisfied.

$$0.8 \leq A/B \qquad \text{formula (1')}$$

$$0.5 \leq A \leq 6 \qquad \text{formula (2')}$$

More preferably, it is preferred that relations of formulae (3') and (4') are satisfied.

$$0.9 \leq A/B \qquad \text{formula (3')}$$

$$0.8 \leq A \leq 5 \qquad \text{formula (4')}$$

Still more preferably, it is preferred that relations of formulae (5') and (6') are satisfied.

$$0.9 \leq A/B \quad \text{formula (5')}$$

$$0.8 \leq A \leq 4 \quad \text{formula (6')}$$

It is preferable to use a polymer electrolyte satisfying preferably $0.5 \leq B \leq 6$, more preferably $0.8 \leq B \leq 5$ and still more preferably $0.8 \leq B \leq 4$, in order to satisfy the formulae. As a method for controlling ion-exchange capacity of the polymer electrolyte, an introduction amount of the ion-exchange group may be controlled. The method of measuring the ion-exchange capacity is based on the method described above. Further, heat treatment is preferably carried out under inactive gas atmosphere at 250°C or lower within 10 minutes.

When the polymer electrolyte of the present invention is used for fuel cell use, it is usually used in the form of a membrane. However, the polymer electrolyte of the present invention is not limited to the form of a membrane and various forms may be taken depending on use.

The polymer electrolyte membrane of the present invention contains the polymer electrolyte and/or the crosslinked polymer electrolyte of the present invention. The method of producing the polymer electrolyte membrane of the present invention is preferably a method in which the polymer electrolyte of the present invention is formed into a membrane by a known solvent casting method and the obtained membrane is subjected to heat treatment. The heat treatment method includes the methods described above. The production of a polymer electrolyte membrane by such method allows the polymer electrolyte forming the polymer electrolyte membrane to be a crosslinked polymer electrolyte. Whether the polymer electrolyte has been crosslinked or not can be determined by performing the method described above using the polymer electrolyte membrane. Further, the polymer electrolyte membrane of the present invention is not limited to this production method and a polymer electrolyte membrane may be produced also by using a polymer electrolyte and/or a crosslinked polymer electrolyte that has been crosslinked by heat treatment before forming a membrane and processing them into a membrane by a known method.

As the solvent casting method described above, a polymer electrolyte is dissolved in a suitable solvent, the solution is applied on a substrate by the cast-application, and the solvent is removed.

The solvent used for membrane formation is not particularly limited provided that it can dissolve a polymer electrolyte and thereafter it can be removed, and aprotic polar solvents such as N,N-dimethylformamide, N,N-dimethylacetamide, N-methyl-2-pyrrolidone, and dimethyl sulfoxide; or chlorine-containing solvents such as dichloromethane, chloroform, 1,2-dichloroethane, chlorobenzene, and dichlorobenzene; alcohols such as methanol, ethanol, and propanol; and alkylene glycol monoalkyl ethers such as ethylene glycol monomethyl ether, ethylene glycol monoethyl ether, propylene glycol monomethyl ether, and propylene glycol monoethyl ether, are suitably used.

Though these can be used alone, if necessary, two or more solvents can also be used in admixture. Among them, dimethylformamide, dimethylacetamide and N-methylpyrrolidone and dimethyl sulfoxide are preferable since they manifest high solubility of a polymer electrolyte.

Even when the polymer electrolyte of the present invention is applied to a catalyst layer, the same method can be applied. These are examples and other methods may be applied.

While a thickness of the polymer electrolyte membrane obtained by forming the polymer electrolyte into a membrane is not specifically limited, it is preferably 5 to 200 μm. A thickness is preferably 5 μm or more for obtaining a membrane strength capable of withstanding practical use and it is preferably 200 μm or less for reduction of membrane resistance, that is, increase of power generation performance. The thickness of the membrane can be controlled depending on the solution concentration or coating thickness on a substrate.

The catalyst composition of the present invention comprises the polymer electrolyte of the present invention and/or the crosslinked polymer electrolyte of the present invention and a catalyst material. A polymer electrolyte other than the polymer electrolyte of the present invention and the crosslinked polymer electrolyte of the present invention may be contained in the catalyst composition of the present invention. Examples of such other polymer electrolytes include existing perfluoroalkane-based polymer electrolytes such as "Nafion" (registered trademark, manufactured by Dupont Corporation); hydrocarbon-based polymer electrolytes such as sulfonated polyethersulfone and sulfonated polyetherketone. As the catalyst material, known material can be used, and fine particles such as platinum and platinum-ruthenium are preferably used. The fine particles such as platinum and platinum-ruthenium are preferably used while being loaded on particulate or fibrous carbon, such as activated carbon and graphite.

Next, a membrane-electrode assembly using the polymer electrolyte of the present invention and/or the crosslinked polymer electrolyte of the present invention will be described. The membrane-electrode assembly of the present invention may contain other polymer electrolytes. Examples of such other polymer electrolytes include those described above.

A solid polymer fuel cell generally has a membrane-electrode assembly (hereinafter sometimes referred to as "MEA") having a configuration in which a catalyst layers (anode catalyst layer and cathode catalyst layer) obtained from a catalyst composition have been formed on both sides of a polymer electrolyte membrane and gas diffusion layers provided on the outer side of the catalyst layers for efficiently supplying gas to the catalyst layers. The MEA of the present invention is just required to contain the polymer electrolyte of the present invention and/or the crosslinked polymer electrolyte of the present invention in either or both of the polymer electrolyte membrane and the catalyst layers forming the MEA, and it is preferable that they be contained in both the polymer electrolyte membrane and the catalyst layer. As the gas diffusion layer, known materials can be used, and porous carbon nonwoven fabric or carbon paper are preferred because they efficiently transfer fuel to a catalyst.

Examples of the method of producing MEA of the present invention include the following methods.

(a) A catalyst layer containing the aforementioned other polymer electrolyte and a catalyst component is formed on a polymer electrolyte membrane containing the crosslinked polymer electrolyte of the present invention, producing a membrane-electrode assembly.
(b) A catalyst layer containing the aforementioned other polymer electrolyte and a catalyst component is formed on a polymer electrolyte membrane containing the polymer electrolyte of the present invention, producing a membrane-electrode assembly, and then heat treatment is carried out, so that the polymer electrolyte membrane is crosslinked.
(c) A catalyst layer containing the polymer electrolyte of the present invention and a catalyst is formed on a polymer electrolyte membrane containing the polymer electrolyte of the present invention, producing a membrane-electrode assembly, and then heat treatment is carried out, so that the polymer electrolyte membrane and the polymer electrolyte are crosslinked.
(d) A catalyst layer containing the crosslinked polymer electrolyte of the present invention and a catalyst is formed on a polymer electrolyte membrane containing the polymer electrolyte of the present invention, producing a membrane-electrode assembly, and then heat treatment is carried out, so that the polymer electrolyte membrane is crosslinked.
(e) A catalyst layer containing the polymer electrolyte of the present invention and a catalyst is formed on a polymer electrolyte membrane containing the crosslinked polymer electrolyte of the present invention, producing a membrane-electrode assembly, and then heat treatment is carried out, so that the polymer electrolyte is crosslinked.
(f) A catalyst layer containing the crosslinked polymer electrolyte of the present invention and a catalyst is formed on a polymer electrolyte membrane containing the crosslinked polymer electrolyte of the present invention, producing a membrane-electrode assembly.

Among them, method (c) is preferred.

The fuel cell of the present invention has a pair of separators, and a membrane-electrode assembly of the present invention disposed between the pair of separators. The fuel cell of the present invention thus obtained has an excellent power generation performance.

## Examples

The present invention will be described with respect to Examples, but the present invention is not limited to the Examples.

Further, unless otherwise specified, characteristic evaluation was carried out by the following methods.

### (1) Evaluation of Fuel Cell Characteristics

A membrane-electrode assembly was prepared in accordance with the method described in JP-2004-319139-A. However, samples produced in examples described below were used as the polymer electrolyte membrane, as an catalyst material-containing ink, an ink produced by adding ethanol to a platinum-ruthenium catalyst (Pt/Ru=60/40 g/g) loaded on carbon and a 5 % by mass Nafion solution (solvent: a mixture of water and a lower alcohol) available from Aldrich Inc. was used for an anode and an ink produced by adding ethanol to a platinum catalyst loaded on carbon and a 5 % by mass Nafion solution (solvent: a mixture of water and a lower alcohol) available from Aldrich Inc. was used for a cathode. In addition, as diffusion layers, carbon paper was used for the anode, and carbon cloth was used for the cathode. The assembly was kept at 40°C, a 30 % by mass aqueous methanol solution was flowed to the anode, and non-humidified air gas was flowed to the cathode, and its power generation characteristics were determined for the evaluation.

(2) Determination of Proton Conductivity σ

A membrane resistance was measured by methods described in "Shin Jikken Kagaku Koza" (New Experimental Chemistry Course), vol. 19, Polymer Chemistry (II), 992p, edited by The Chemical Society of Japan, Maruzen.

However, a used cell was made of carbon, a platinum graphite-attached platinum electrode was not used and a terminal of an impedance measuring device was directly connected to a cell. The polymer electrolyte membrane was set in the cell and the resistance value was measured, then the resistance value was measured again excluding the polymer electrolyte membrane, and membrane resistance was calculated from the difference between both of the values. 1 mol/L diluted sulfuric acid was used in the solution contacting both side of the polymer electrolyte membrane. The measurement was carried out at 23°C in a 50% RH atmosphere. The proton conductivity was calculated from the thickness of the membrane and the resistance value from immersing diluted sulfuric acid.

(3) Determination of Methanol Permeation Coefficient D

After a polymer electrolyte membrane where an ion-exchange group is converted into free acid type (proton type) was immersed in10 wt% aqueous methanol solution for 2 hours, the polymer electrolyte membrane was pinched in the center of an H-shaped diaphragm cell comprised of cells A and B, a 10 wt % aqueous methanol solution was placed in cell A and purified water was placed in cell B; at 23°C the methanol concentrations in cells B at the initial state and after a certain time t (sec) from the initial state were determined and a methanol permeation coefficient D ($cm^2$/sec) was found by the following equation:

$$D=\{(V\times l)/(A\times t)\}\times \ln\{(C1-Cm)/(C2-Cn)\}$$

wherein,
V: volume of solution in cell B ($cm^3$)
1: membrane thickness of polymer electrolyte membrane (cm)
A: cross sectional area of polymer electrolyte membrane ($cm^2$)
t: time (sec)
C1 : methanol concentration in cell B at the initial state (mol/$cm^3$)
C2 : methanol concentration in cell B after the certain time t (mol/$cm^3$)
Cm : methanol concentration in cell A at the initial state (mol/$cm^3$)
Cn : methanol concentration in cell A after the certain time t (mol/$cm^3$)
and herein the methanol permeation amount is sufficiently small, thus V was set at a constant value at the initial purified water volume and $C_m = C_n$, which was set to the initial concentration (10 wt %).

(4) Measurement of Molecular Weight

Molecular weights in Examples are polystyrene-equivalent number average molecular weights (Mn) and weight average molecular weights (Mw), measured under the following conditions by gel permeation chromatography (GPC).

Conditions

GPC measurement apparatus: Prominence GPC system manufactured by Shimadzu Corporation
Column: TSKgel $GMH_{HR}$-M manufactured by TOSOH corporation
Column temperature: 40°C
Mobile phase solvent: DMF (LiBr was added so as to give 10 mmol/$dm^3$) Solvent flow rate: 0.5 mL/min

(5) Measurement of Ion-Exchange Capacity (IEC)

A membrane with transformation of an ion-exchange group to the free acid type (proton type) was further dried using a halogen moisture percentage meter at a heating temperature of 105°C to obtain an absolute dry weight. This membrane was immersed in 5 mL of a 0.1 mol/L sodium hydroxide aqueous solution, 50 mL ion-exchange water was further added, and this was allowed to stand for 2 hours. Thereafter, to a solution in which this polymer electrolyte membrane was immersed, was added gradually 0.1 mol/L hydrochloric acid, thereby, titration was performed to obtain a neutralization point. From an absolute dry mass of the membrane and an amount of 0.1 mol/L hydrochloric acid necessary for the neutralization point, an ion-exchange capacity of the polymer electrolyte was calculated.

(6) Content of Repeating Unit Represented by Formula (1)

The polymer electrolyte before heat treatment was dissolved in DMSO-d6 and $^{1}$H-NMR was measured. The content of the repeating unit represented by formula (1) was calculated from an integral ratio of the peak derived from repeating unit represented by formula (1) of the obtained spectrum to the other peak derived from other repeating units.

Example 1

Under argon atmosphere, 149 g of DMSO, 59 g of toluene, 5.60 g (22.49 mmol) of sodium 2,5-dichlorobenzenesulfonate, 2.25 g of the following polyetherethersulfone having chloro groups at the end (Polyphenylsulfone manufactured by Aldrich):

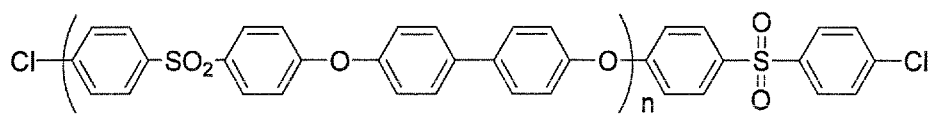

,

0.40 g (2.25 mmol) of 3,5-dichlorobenzyl alcohol and 10.62 g (68.02 mmol) of 2,2'-bipyridyl were charged into a flask with azeotropic distillation apparatus and stirred, and then the bath temperature was raised to 150°C and toluene was heated and evaporated and water in the system was subjected to azeotropic dehydration, and cooled to 65°C. Then, to this was added 17.01 g (61.83 mmol) of bis(1,5-cyclooctadiene)nickel(0), which were raised to 70°C, and stirred for 2.5 hours at the same temperature. The mixture was allowed to cool, and poured into a large amount of methanol to precipitate a polymer, which was then collected by filtration. The polymer was dispersed in the large amount of methanol and collected by filtration. The treatment was repeated several times and then the obtained crude polymer was dispersed in 6 mol/L hydrochloric acid and was collected by filtration. The treatment was repeated several times, and then the resultant was dispersed in a large amount methanol and collected by filtration. The operation was repeated several times until filtration was neutral (pH 4 or more), and the obtained crude polymer was dissolved in NMP at 5 wt% and poured into a large amount of 6 mol/L hydrochloric acid to reprecipitate the polymer, followed by purification. The resultant was washed with water until filtration was neutral (pH 4 or more), affording 2.95 g of the target block copolymer by vacuum-freeze drying. The number average molecular weight and the weight average molecular weight of the block copolymer were 106,000 and 250,000 respectively.

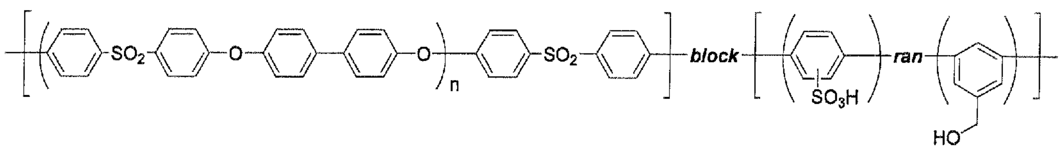

wherein "block" means a block copolymer having a block including the repeating unit in the parenthesis respectively; and "ran" means that a repeating unit in the parenthesis is bonded randomly.

The resultant block copolymer was dissolved in NMP at 13 wt%, to prepare a polymer electrolyte solution. Then, the obtained polymer electrolyte solution was applied on a glass substrate by the cast-application, and dried at normal pressure and 80°C for 2 hours, and thereby solvent was removed. A portion of the polymer electrolyte was immersed in 1 mol/L hydrochloric acid for 2 hours, followed by washing with ion-exchange water until the wash solution was neutral and IEC was measured. The IEC (B) of the obtained polymer electrolyte before crosslinking was 1.9 meq/g. The residue was subjected to heat treatment at 180°C under nitrogen atmosphere for 60 minutes. The resultant was immersed in 1 mol/L hydrochloric acid for 2 hours. 24 μm of polymer electrolyte membrane 1 was produced through washing of ion-exchange water. The obtained polymer electrolyte membrane 1 was not dissolved in NMP and the shape of the membrane was maintained and the crosslinked polymer electrolyte was confirmed. Further, the IEC was measured using the membrane and the IEC (A) of the obtained crosslinked polymer electrolyte was 1.9 meq/g.

Example 2

Under argon atmosphere, 149 g of DMSO, 59 g of toluene, 12.00 g (48.18 mmol) of sodium 2,5-dichlorobenzenesulfonate, 2.67 g of the following polyethersulfone having chloro groups at the end (SUMIKAEXCEL PES 5200P

manufactured by Sumitomo Chemicals Co., Ltd.):

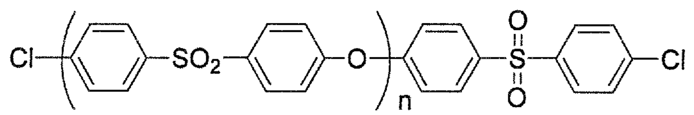

,

0,85 g (4.82 mmol) of 3,5-dichlorobenzyl alcohol, and 22.76 g (145.75 mmol) of 2,2'-bipyridyl were charged into a flask with azeotropic distillation apparatus and stirred, and then the bath temperature was raised to 150°C and toluene was heated and evaporated and water in the system was subjected to azeotropic dehydration, and cooled to 65°C. Then, to this was added 36.45 g (132.50 mmol) of bis(1,5-cyclooctadiene)nickel(0), which were raised to 70°C, and stirred for 1 hour at the same temperature. The mixture was allowed to cool, and poured into a large amount of methanol to precipitate polymer and the polymer was collected by filtration. The polymer was dispersed in the large amount of methanol and collected by filtration. The treatment was repeated several times and then the obtained crude polymer was dispersed in 6 mol/L hydrochloric acid and was collected by filtration. The treatment was repeated several times, and then the resultant was dispersed in a large amount of acetone and collected by filtration. The operation was repeated several times until filtration was neutral (pH 4 or more), and the obtained crude polymer was dissolved in DMSO at 5 wt% and the resultant was poured into a large amount of 6 mol/L hydrochloric acid to reprecipitate the polymer, followed by purification. The resultant was washed with water until filtration was neutral (pH 4 or more), affording 2.66 g of the target block copolymer by vacuum-freeze drying. The number average molecular weight and the weight average molecular weight of the block copolymer were 96,000 and 289,000 respectively.

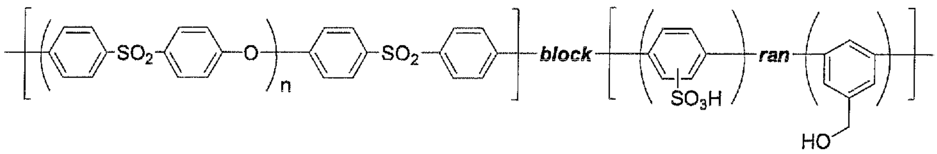

wherein "block" and "ran" have the same definitions as described above.

The resultant block copolymer was dissolved in DMSO at 13 wt%, to prepare a polymer electrolyte solution. Then, the obtained polymer electrolyte solution was applied on a glass substrate by the cast-application, and dried at normal pressure and 80°C for 2 hours, and thereby solvent was removed, then immersed in 1 mol/L hydrochloric acid for 2 hours, followed by washing with ion-exchange water for 2 hours and dried at room temperature. The IEC (B) of the obtained polymer electrolyte before crosslinking was 2.1 meq/g. The residue was subjected to heat treatment at 180°C under nitrogen atmosphere for 10 minutes. 21 μm of polymer electrolyte membrane 2 was produced. The obtained polymer electrolyte membrane 2 was not dissolved in DMSO and the shape of membrane was maintained and thus the crosslinked polymer electrolyte was confirmed. Further, the IEC was measured using the membrane and the IEC of the obtained crosslinked polymer electrolyte was 2.0 meq/g.

Example 3

Under argon atmosphere, 251 g of DMSO, 99 g of toluene, 11.00 g (44.17 mmol) of sodium 2,5-dichlorobenzenesulfonate, 2.20 g of the following polyetherethersulfone having chloro groups at the end (Polyphenylsulfone manufactured by Aldrich):

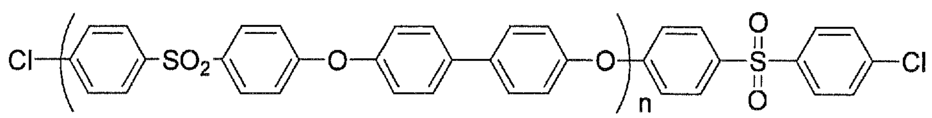

,

1.56 g (8.83 mmol) of 3,5-dichlorobenzyl alcohol, 22.76 g (145.75 mmol) of 2,2'-bipyridyl were charged into a flask with azeotropic distillation apparatus and stirred, and then the bath temperature was raised to 150°C and toluene was heated and evaporated and water in the system was subjected to azeotropic dehydration, and cooled to 65°C. Then, to this was added 36.45 g (132.50 mmol) of bis(1,5-cyclooctadiene)nickel(0), which were raised to 70°C, and stirred for 1.5

hours at the same temperature. The mixture was allowed to cool, and poured into a large amount of methanol to precipitate a polymer, which was then collected by filtration. The polymer was dispersed in the large amount of methanol and collected by filtration. The treatment was repeated several times and then the obtained crude polymer was dispersed in 6 mol/L hydrochloric acid and was collected by filtration. The treatment was repeated several times, and then the resultant was dispersed in a large amount methanol and collected by filtration. The operation was repeated several times until filtration was neutral (pH 4 or more), and the obtained crude polymer was dissolved in NMP at 5 wt%, and poured into a large amount of 6 mol/L hydrochloric acid to reprecipitate polymer, followed by purification. The resultant was washed with water until filtration was neutral (pH 4 or more), affording 2.25 g of the target block copolymer by vacuum-freeze drying. The number average molecular weight and the weight average molecular weight of the block copolymer were 77,000 and 139,000 respectively.

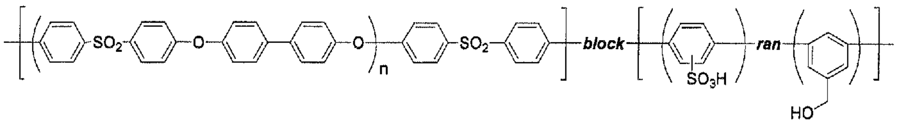

wherein "block" and "ran" have the same definitions as described above.

The resultant block copolymer was dissolved in NMP at 13 wt%, to prepare a polymer electrolyte solution. Then, the obtained polymer electrolyte solution was applied on a glass substrate by the cast-application, and dried at normal pressure and 80°C for 2 hours, and thereby solvent was removed, then immersed in 1 mol/L hydrochloric acid for 2 hours, followed by washing with ion-exchange water for 2 hours and dried at room temperature. The IEC (B) of the obtained polymer electrolyte before crosslinking was 1.6 meq/g. The residue was subjected to heat treatment at 180°C under nitrogen atmosphere for 15 minutes. 30 μm of polymer electrolyte membrane 3 was produced. The obtained polymer electrolyte membrane 3 was not dissolved in NMP and the shape of membrane was maintained and thus the crosslinked polymer electrolyte was confirmed. Further, the IEC was measured using the membrane and the IEC of the obtained crosslinked polymer electrolyte was 1.6 meq/g.

Example 4

Under argon atmosphere, 251 g of DMSO, 99 g of toluene, 11.00 g (44.17 mmol) of sodium 2,5-dichlorobenzenesulfonate, 2.20 g of the following polyethersulfone having chloro groups at the end (SUMIKAEXCEL PES 5200P manufactured by Sumitomo Chemicals Co., Ltd.):

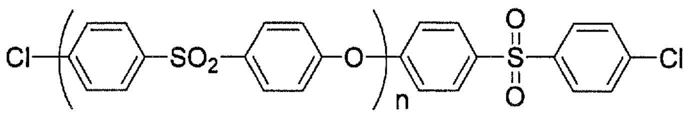

,

1.56 g (2.25 mmol) of 3,5-dichlorobenzyl alcohol, and 22.76 g (145.75 mmol) of 2,2'-bipyridyl were charged into a flask with azeotropic distillation apparatus and stirred, and then the bath temperature was raised to 150°C and toluene was heated and evaporated and water in the system was subjected to azeotropic dehydration, and cooled to 65°C. Then, to this was added 36.45 g (132.50 mmol) of bis(1,5-cyclooctadiene)nickel(0), which were raised to 70°C, and stirred for 1.5 hours at the same temperature. The mixture was allowed to cool, and poured into a large amount of methanol to precipitate a polymer, which was then collected by filtration. The polymer was dispersed in the large amount of methanol and collected by filtration. The treatment was repeated several times and then the obtained crude polymer was dispersed in 6 mol/L hydrochloric acid and was collected by filtration. The treatment was repeated several times, and then the resultant was dispersed in a large amount of methanol and collected by filtration. The operation was repeated several times until filtration was neutral (pH 4 or more), and the obtained crude polymer was dissolved in DMSO at 5 wt%, and poured into a large amount of 6 mol/L hydrochloric acid to reprecipitate polymer, followed by purification. The resultant was washed with water until filtration was neutral (pH 4 or more), affording 2.12 g of the target block copolymer by vacuum-freeze drying. The number average molecular weight and the weight average molecular weight of the block copolymer were 91,000 and 143,000 respectively.

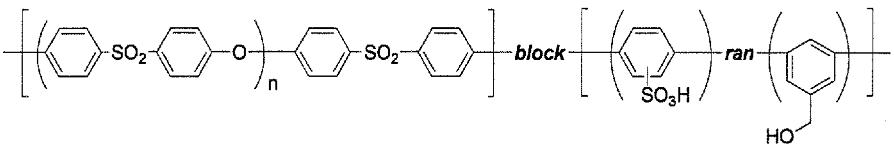

wherein "block" and "ran" have the same definitions as described above.

The resultant block copolymer was dissolved in DMSO at 13 wt%, to prepare a polymer electrolyte solution. Then, the obtained polymer electrolyte solution was applied on a glass substrate by the cast-application, and dried at normal pressure and 80°C for 2 hours, and thereby a solvent was removed, then immersed in 1 mol/L hydrochloric acid for 2 hours, followed by washing with ion-exchange water for 2 hours and dried at room temperature. The IEC (B) of the obtained polymer electrolyte before crosslinking was 1.4 meq/g. The residue was subjected to heat treatment at 180°C under nitrogen atmosphere for 10 minutes. 24 μm of polymer electrolyte membrane 4 was produced. The obtained polymer electrolyte membrane 4 was not dissolved in DMSO and the shape of the membrane was maintained and thus the crosslinked polymer electrolyte was confirmed. Further, the IEC was measured using the membrane and IEC of the obtained crosslinked polymer electrolyte was 1.4 meq/g.

Example 5

Under argon atmosphere, 271 g of DMSO, 106 g of toluene, 9.50 g (38.14 mmol) of sodium 2,5-dichlorobenzenesulfonate, 3.39 g of the following polyethersulfone having chloro groups at the end (SUMIKAEXCEL PES 3100P manufactured by Sumitomo Chemicals Co., Ltd.):

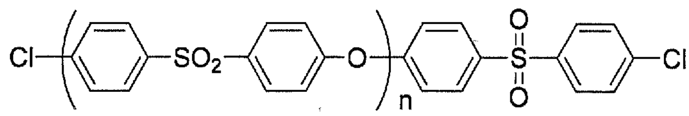

,

1.35 g (7.63 mmol) of 3,5-dichlorobenzyl alcohol, and 19.66 g (125.88 mmol) of 2,2'-bipyridyl were charged into a flask with azeotropic distillation apparatus and stirred, and then the bath temperature was raised to 150°C and toluene was heated and evaporated and water in the system was subjected to azeotropic dehydration, and cooled to 65°C. Then, to this was added 31.48 g (114.43 mmol) of bis(1,5-cyclooctadiene)nickel(0), which were raised to 70°C, and stirred for 1 hour at the same temperature. The mixture was allowed to cool, and poured into a large amount of methanol to precipitate polymer and the polymer was collected by filtration. The polymer was dispersed in the large amount of methanol and collected by filtration. The treatment was repeated several times and then the obtained crude polymer was dispersed in 6 mol/L hydrochloric acid and was collected by filtration. The treatment was repeated several times, and then the resultant was dispersed in a large amount of acetone and collected by filtration. The operation was repeated several times until filtration was neutral (pH 4 or more), and the obtained crude polymer was dissolved in DMSO at 5 wt%, and poured into a large amount of 6 mol/L hydrochloric acid to reprecipitate polymer, followed by purification. The resultant was washed with water until filtration was neutral (pH 4 or more), affording 5.34 g of the target block copolymer by vacuum-freeze drying. The number average molecular weight and the weight average molecular weight of the block copolymer were 96,000 and 235,000 respectively.

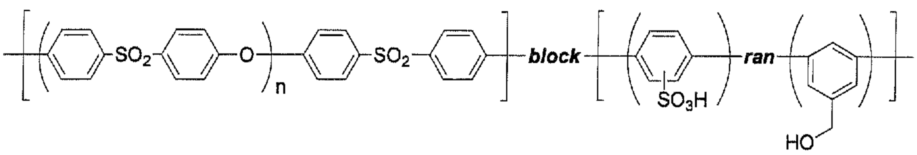

wherein "block" and "ran" have the same definitions as described above.

The resultant block copolymer was dissolved in DMSO at 15 wt%, to prepare a polymer electrolyte solution. Then, the obtained polymer electrolyte solution was applied on a glass substrate by the cast-application, and dried at normal pressure and 80°C for 2 hours, and thereby a solvent was removed, then immersed in 1 mol/L hydrochloric acid

for 2 hours, followed by washing with ion-exchange water for 2 hours and dried at room temperature. The IEC (B) of the obtained polymer electrolyte before crosslinking was 2.4 meq/g. The residue was subjected to heat treatment at 180°C under nitrogen atmosphere for 10 minutes. 26 μm of polymer electrolyte membrane 5 was produced. The obtained polymer electrolyte membrane 5 was not dissolved in DMSO and the shape of the membrane was maintained and thus the crosslinked polymer electrolyte was confirmed. Further, the IEC was measured using the membrane and the IEC of the obtained crosslinked polymer electrolyte was 2.4 meq/g.

Example 6

Under argon atmosphere, 271 g of DMSO, 106 g of toluene, 9.50 g (38.14 mmol) of sodium 2,5-dichlorobenzenesulfonate, 3.00 g of the following polyethersulfone having chloro groups at the end (SUMIKAEXCEL PES 3100P manufactured by Sumitomo Chemicals Co., Ltd.):

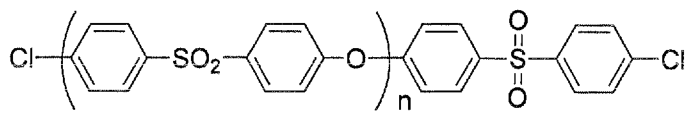

,

2.03 g (11.44 mmol) of 3,5-dichlorobenzyl alcohol, and 21.30 g (136.37 mmol) of 2,2'-bipyridyl were charged into a flask with azeotropic distillation apparatus and stirred, and then the bath temperature was raised to 150°C and toluene was heated and evaporated and water in the system was subjected to azeotropic dehydration, and cooled to 65°C. Then, to this was added 34.10 g (123.97 mmol) of bis(1,5-cyclooctadiene)nickel(0), which were raised to 70°C, and stirred for 2 hours at the same temperature. The mixture was allowed to cool, and poured into a large amount of methanol to precipitate polymer and the polymer was collected by filtration. The polymer was dispersed in the large amount of methanol and collected by filtration. The treatment was repeated several times and then the obtained crude polymer was dispersed in 6 mol/L hydrochloric acid and was collected by filtration. The treatment was repeated several times, and then the resultant was dispersed in a large amount of acetone and collected by filtration. The operation was repeated several times until filtration was neutral (pH 4 or more), and the obtained crude polymer was dissolved in DMSO at 5 wt%, and poured into a large amount of 6 mol/L hydrochloric acid to reprecipitate polymer, followed by purification. The resultant was washed with water until filtration was neutral (pH 4 or more), affording 4.16 g of the target block copolymer by vacuum-freeze drying. The number average molecular weight and the weight average molecular weight of the block copolymer were 96,000 and 235,000 respectively.

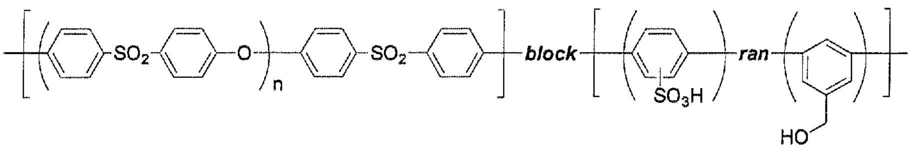

wherein "block" and "ran" have the same definitions as described above.

The resultant block copolymer was dissolved in DMSO at 15 wt%, to prepare a polymer electrolyte solution. Then, the obtained polymer electrolyte solution was applied on a glass substrate by the cast-application, and dried at normal pressure and 80°C for 2 hours, and thereby a solvent was removed, then immersed in 1 mol/L hydrochloric acid for 2 hours, followed by washing with ion-exchange water for 2 hours and dried at room temperature. The IEC (B) of the obtained polymer electrolyte before crosslinking was 2.3 meq/g. The residue was subjected to heat treatment under nitrogen atmosphere at 180°C for 10 minutes. 26 μm of polymer electrolyte membrane 6 was produced. The obtained polymer electrolyte membrane 6 was not dissolved in DMSO and the shape of the membrane was maintained and thus the crosslinked polymer electrolyte was confirmed. Further, the IEC was measured using the membrane and the IEC of the obtained crosslinked polymer electrolyte was 2.3 meq/g.

Example 7

Under argon atmosphere, 266 g of DMSO, 104 g of toluene, 9.50 g (38.14 mmol) of sodium 2,5-dichlorobenzenesulfonate, 3.80 g of the following polyethersulfone having chloro groups at the end (SUMIKAEXCEL PES 5200P

manufactured by Sumitomo Chemicals Co., Ltd.):

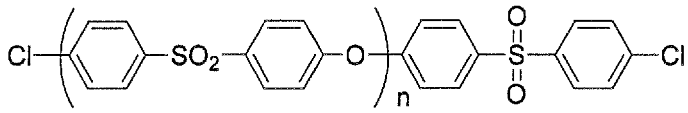

,

0.68 g (3.81 mmol) of 2,5-dichlorobenzyl alcohol, and 18.02 g (115.39 mmol) of 2,2'-bipyridyl were charged into a flask with azeotropic distillation apparatus and stirred, and then the bath temperature was raised to 150°C and toluene was heated and evaporated and water in the system was subjected to azeotropic dehydration, and cooled to 65°C. Then, to this was added 28.85 g (104.90 mmol) of bis(1,5-cyclooctadiene)nickel(0), which were raised to 70°C, and stirred for 1 hour at the same temperature. The mixture was allowed to cool, and poured into a large amount of methanol to precipitate polymer and the polymer was collected by filtration. The polymer was dispersed in the large amount of methanol and collected by filtration. The treatment was repeated several times and then the obtained crude polymer was dispersed in 6 mol/L hydrochloric acid and was collected by filtration. The treatment was repeated several times, and then the resultant was dispersed in a large amount of acetone and collected by filtration. The operation was repeated several times until filtration was neutral (pH 4 or more), and the obtained crude polymer was dissolved in DMSO at 5 wt%, and poured into a large amount of 6 mol/L hydrochloric acid to reprecipitate polymer, followed by purification. The resultant was washed with water until filtration was neutral (pH 4 or more), affording 5.12 g of the target block copolymer by vacuum-freeze drying. The number average molecular weight and the weight average molecular weight of the block copolymer were 118,000 and 289,000 respectively.

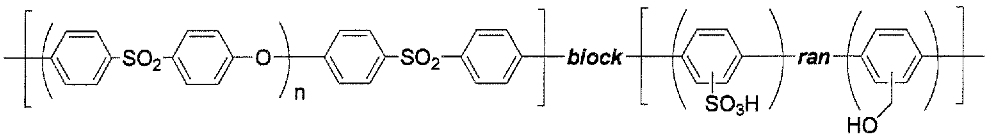

wherein "block" and "ran" have the same definitions as described above.

The resultant block copolymer was dissolved in DMSO at 13 wt%, to prepare a polymer electrolyte solution. Then, the obtained polymer electrolyte solution was applied on a glass substrate by the cast-application, and dried at normal pressure and 80°C for 2 hours, and thereby a solvent was removed, then immersed in 1 mol/L hydrochloric acid for 2 hours, followed by washing with ion-exchange water for 2 hours and dried at room temperature. The IEC (B) of the obtained polymer electrolyte before crosslinking was 1.9 meq/g. The residue was subjected to heat treatment at 180°C under nitrogen atmosphere for 10 minutes. 24 μm of polymer electrolyte membrane 7 was produced. The obtained polymer electrolyte membrane 7 was not dissolved in DMSO and the shape of the membrane was maintained and thus the crosslinked polymer electrolyte was confirmed. Further, IEC was measured using the membrane and the IEC (A) of the obtained crosslinked polymer electrolyte was 1.9 meq/g.

Example 8

Under argon atmosphere, 233 g of DMSO, 88 g of toluene, 4.00 g (16.06 mmol) of sodium 2,5-dichlorobenzenesulfonate, 7.46 g (29.71 mmol) of 2,5-dichlorobenzophenone, 0.28 g (1.61 mmol) of 3,5-dichlorobenzyl alcohol, 20.35 g (130.28 mmol) of 2,2'-bipyridyl were charged into a flask with azeotropic distillation apparatus and stirred, and then the bath temperature was raised to 150°C and toluene was heated and evaporated and water in the system was subjected to azeotropic dehydration, and cooled to 65°C. Then, to this was added 32.58 g (118.44 mmol) of bis(1,5-cyclooctadiene) nickel(0), which were raised to 70°C, and stirred for 1 hour at the same temperature. The mixture was allowed to cool, and poured into a large amount of methanol to precipitate polymer and the polymer was collected by filtration. The polymer was dispersed in the large amount of methanol and collected by filtration. The treatment was repeated several times and then the obtained crude polymer was dispersed in 6 mol/L hydrochloric acid and was collected by filtration. The treatment was repeated several times, and then the resultant was dispersed in a large amount of acetone and collected by filtration. The operation was repeated several times until filtration was neutral (pH 4 or more), and the obtained crude polymer was dissolved in DMSO at 5 wt%, and poured into a large amount of 6 mol/L hydrochloric acid to reprecipitate polymer, and this was followed by purification. The resultant was washed with water until filtration was neutral (pH 4 or more), affording 6.34 g of the target block copolymer by vacuum-freeze drying. The number average

molecular weight and the weight average molecular weight of the random copolymer were 73,000 and 134,000 respectively. It was confirmed by $^{1}$H-NMR that the obtained random copolymer had a structural unit derived from 3,5-dichlorobenzyl alcohol.

The resultant random copolymer was dissolved in DMSO at 12 wt%, to prepare a polymer electrolyte solution. Then, the obtained polymer electrolyte solution was applied on a glass substrate by the cast-application, and dried at normal pressure and 80°C for 2 hours, and thereby a solvent was removed, then immersed in 1 mol/L hydrochloric acid for 2 hours, followed by washing with ion-exchange water for 2 hours and dried at room temperature. The IEC (B) of the obtained polymer electrolyte before crosslinking was 1.9 meq/g. The residue was subjected to heat treatment at 180°C under nitrogen atmosphere for 10 minutes. 21 μm of polymer electrolyte membrane 8 was produced. The obtained polymer electrolyte membrane 8 was not dissolved in DMSO and the shape of the membrane was maintained and thus the crosslinked polymer electrolyte was confirmed. Further, the IEC was measured using the membrane and the IEC (A) of the obtained crosslinked polymer electrolyte was 1.9 meq/g.

The content of the repeating unit represented by formula (1) contained in the block copolymer obtained in Examples 1 to 8 is shown in Table 1. Further, when an ion-exchange capacity of the crosslinked polymer electrolyte obtained in Examples 1 to 8 was defined as A (meq/g) and an ion-exchange capacity of the polymer electrolyte before crosslinking the crosslinked polymer electrolyte was defined as B (meq/g), A, B and A/B values are shown in Table 1.

Table 1

| | Example 1 | Example 2 | Example 3 | Example 4 | Example 5 | Example 6 | Example 7 | Example 8 |
|---|---|---|---|---|---|---|---|---|
| Content of formula (1) (% by mass) | 1.7 | 1.2 | 2.6 | 1.9 | 3.9 | 6.4 | 0.9 | 1.2 |
| A (meq/g) | 1.9 | 2.0 | 1.6 | 1.4 | 2.4 | 2.3 | 1.9 | 1.9 |
| B (meq/g) | 1.9 | 2.1 | 1.6 | 1.4 | 2.4 | 2.3 | 1.9 | 1.9 |
| A/B | 1.0 | 0.95 | 1.0 | 1.0 | 1.0 | 1.0 | 1.0 | 1.0 |

Comparative Example 1

Proton conductivity and the methanol permeability coefficient of commercially available Nafion 117 membrane were measured.

The results of measuring proton conductivity and the methanol permeability coefficient of the polymer electrolyte membranes after heat treatment obtained in Examples 1 to 8 and Nafion membrane in Comparative Example 1 are shown in Table 2. For the smaller D/σ values shown in Table 2, both a high proton conductivity and a satisfactory methanol barrier property were obtained.

Table 2

| | Proton conductivity $\sigma \times 10^2$ (S/cm) | Methanol permeability coefficient D $\times 10^7$($cm^2$/s) | D/σ $\times 10^6$($cm^3$/S·s) |
|---|---|---|---|
| Example 1 | 1.09 | 0.59 | 5.4 |
| Example 2 | 7.19 | 4.05 | 5.6 |
| Example 3 | 1.43 | 0.79 | 5.5 |
| Example 4 | 3.12 | 1.64 | 5.3 |
| Example 5 | 6.37 | 3.26 | 5.1 |
| Example 6 | 6.14 | 3.10 | 5.0 |
| Example 7 | 2.95 | 2.62 | 8.9 |

(continued)

| | Proton conductivity $\sigma \times 10^2$ (S/cm) | Methanol permeability coefficient D $\times 10^7$($cm^2$/s) | D/$\sigma$ $\times 10^6$($cm^3$/S·s) |
|---|---|---|---|
| Example 8 | 1.75 | 1.67 | 9.5 |
| Comparative Example 1 | 7.14 | 17.39 | 24.4 |

Example 9

Fuel cell characteristic evaluation of the polymer electrolyte membrane 1 was carried out. The maximum power density was 42 mW/$cm^2$ and the cell temperature was stabilized during measurement.

Comparative Example 2

Fuel cell characteristic evaluation of Nafion 117 membrane was carried out. The maximum power density was 25 mW/$cm^2$, but the cell temperature was increased during measurement, and thus was unstabilized.

From the results described above, it has been concluded that a polymer electrolyte having a repeating unit represented by the following formula (1) in its molecule and an ion-exchange group in the molecule, or a polymer electrolyte comprising a block having an ion-exchange group and a block having substantially no ion-exchange groups, in which at least one block having the ion-exchange group has a crosslinkable substituent, has low D/σ value and satisfies both a high proton conductivity and a methanol barrier property. Further, from the result of Example 9 and Comparative Example 2, it has been concluded that the polymer electrolyte membrane of the present invention can provide a fuel cell with an excellent power generation performance.

Industrial Applicability

According to the present invention, a polymer electrolyte capable of obtaining a polymer electrolyte membrane where methanol barrier properties are excellent while keeping high proton conductivity can be produced easily by containing a repeating unit represented by the formula (1) in the polymer electrolyte, or by containing a crosslinkable substituent in a block having an ion-exchange group in a block copolymer containing a block having an ion-exchange group and a block having substantially no ion-exchange groups. Further, a crosslinked polymer electrolyte can be obtained by a very easy method where the polymer electrolyte is subjected to heat treatment at a temperature of 50 to 300°C. Further, by introducing a repeating unit represented by formula (1) in a portion to be crosslinked in a polymer electrolyte, an introduction portion only can be selectively crosslinked and molecular design can be carried out easily. The crosslinked polymer electrolyte of the present invention is different from conventional crosslinked polymer electrolytes which is produced by making a polymer electrolyte to react by adding a crosslinking agent, and thus a process of removing an unreacted crosslinking agent is not required and thus it is industrially useful. The polymer electrolyte of the present invention is not limited to a fuel cell using methanol as fuel, and can be used for a fuel cell using hydrogen as fuel and a fuel cell having excellent power generation can be obtained by using the polymer electrolyte, and it is extremely industrially useful.

## Claims

1. A polymer electrolyte having a repeating unit represented by the following formula (1) in its molecule and an ion-exchange group in the molecule:

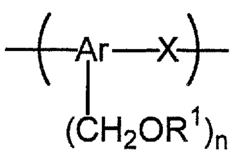

(1)

wherein Ar represents an optionally substituted aromatic group; $R^1$ represents a hydrogen atom or an organic group; X represents a direct bond or a divalent group; n represents an integer of 1 to 3; and when n is 2 or more, the plurality of $R^1$'s may be the same as or different from each other.

**2.** The polymer electrolyte according to claim 1, wherein the repeating unit represented by formula (1) is a repeating unit represented by the following formula (2):

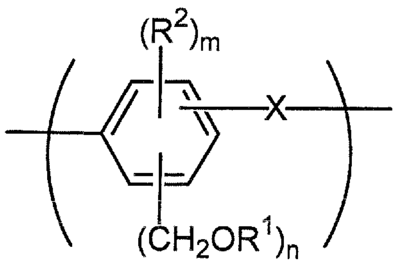

(2)

wherein $R^1$, X, and n have the same definitions as those described above; R represents a fluorine atom, an alkyl group having 1 to 20 carbon atoms, an alkoxy group having 1 to 20 carbon atoms, an aryl group having 6 to 20 carbon atoms, an aryloxy group having 6 to 20 carbon atoms, an acyl group having 2 to 20 carbon atoms or an ion-exchange group; m represents an integer of 0 to 3, the sum of n and m being 4 or less; and when m is 2 or more, the plurality of $R^2$'s may be the same as or different from each other.

**3.** The polymer electrolyte according to claim 1 or 2, wherein the polymer electrolyte is a polymer electrolyte that has 0.1 to 20% by mass of the repeating unit represented by formula (1).

**4.** The polymer electrolyte according to any one of claims 1 to 3, comprising a repeating unit represented by formula (1), a repeating unit having an ion-exchange group, and a repeating unit having no ion-exchange groups.

**5.** The polymer electrolyte according to claim 4, wherein the arrangement of the repeating unit represented by formula (1), the repeating unit having an ion-exchange group and the repeating unit having no ion-exchange groups is random.

**6.** A polymer electrolyte which is a block copolymer comprising a block having an ion-exchange group and a block having substantially no ion-exchange groups, wherein the block having an ion-exchange group has a crosslinkable substituent.

**7.** The polymer electrolyte according to claim 6, wherein the main chain of the block having an ion-exchange group has an aromatic group.

**8.** The polymer electrolyte according to claim 6 or 7, wherein the crosslinkable substituent is a thermally crosslinkable substituent.

**9.** The polymer electrolyte according to claim 8, wherein the thermally crosslinkable substituent is a substituent represented by the following formula (A1):

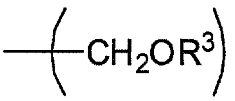

(A1)

wherein $R^3$ represents a hydrogen atom or an organic group.

**10.** The polymer electrolyte according to any one of claims 6 to 9, wherein the block having an ion-exchange group comprises a repeating unit represented by the following formula (1a):

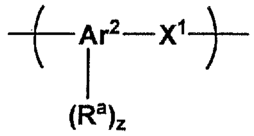

(1a)

wherein $Ar^2$ represents an optionally substituted aromatic group; $R^a$ represents a crosslinkable substituent; $X^1$ represents a direct bond or a divalent group; z represents an integer of 1 to 3; and when z is 2 or more, the plurality of $R^a$'s may be the same as or different from each other.

**11.** The polymer electrolyte according to claim 10, wherein the repeating unit represented by formula (1a) is a repeating unit represented by the following formula (1b):

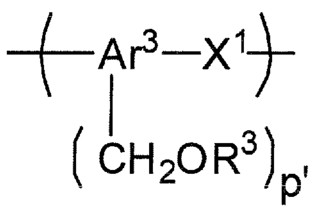

(1b)

wherein $Ar^3$ represents an optionally substituted aromatic group; $R^3$ has the same definition as that described above; $X^1$ represents a direct bond or a divalent group; p' represents an integer of 1 to 3; and when p' is 2 or more, the plurality of $R^3$'s may be the same as or different from each other.

**12.** The polymer electrolyte according to claim 10, wherein the repeating unit represented by formula (1a) is a repeating unit represented by the following formula (1c):

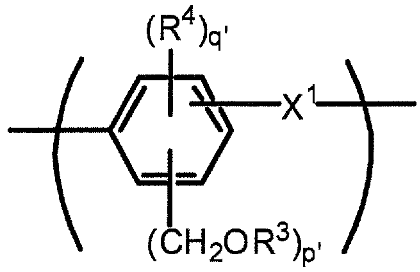

(1c)

wherein $R^3$, $X^1$, and p' have the same definitions as those as described above; $R^4$ represents a fluorine atom, an alkyl group having 1 to 20 carbon atoms, an alkoxy group having 1 to 20 carbon atoms, an aryl group having 6 to 20 carbon atoms, an aryloxy group having 6 to 20 carbon atoms, an acyl group having 2 to 20 carbon atoms or an ion-exchange group; q represents an integer of 0 to 3, the sum of p' and q being 4 or less; and when q is 2 or more, the plurality of $R^4$'s may be the same as or different from each other.

**13.** The polymer electrolyte according to any one of claims 10 to 12, wherein the polymer electrolyte is a polymer electrolyte that has 0.1 to 20% by mass of the repeating unit represented by formula (1a).

**14.** The polymer electrolyte according to any one of claims 10 to 13, wherein the block having an ion-exchange group comprises a repeating unit represented by formula (1a) and a repeating unit represented by the following formula (7):

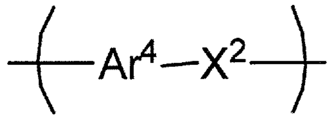

(7)

wherein $Ar^4$ represents an optionally substituted aromatic group and at least one ion-exchange group is bonded to $Ar^4$; and $X^2$ represents a direct bond or a divalent group.

**15.** The polymer electrolyte according to any one of claims 6 to 14, wherein the block having substantially no ion-exchange groups comprises a repeating unit represented by the following formula (8):

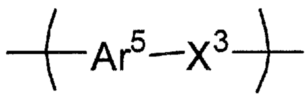

(8)

wherein $Ar^5$ represents an optionally substituted aromatic group and $X^3$ represents a direct bond or a divalent group.

**16.** A crosslinked polymer electrolyte produced by crosslinking the polymer electrolyte according to any one of claims 1 to 15 by heat treatment at a temperature of 50 to 300°C or by light treatment at an irradiation amount of 1,000 to 30,000 $mJ/cm^2$.

**17.** A crosslinked polymer electrolyte produced by crosslinking the polymer electrolyte according to any one of claims 1 to 15 by heat treatment at a temperature of 50 to 300°C.

**18.** The crosslinked polymer electrolyte according to claims 16 or 17, wherein when the ion-exchange capacity of the crosslinked polymer electrolyte is denoted by A (meq/g) and the ion-exchange capacity of the polymer electrolyte before the crosslinking to form the crosslinked polymer electrolyte is denoted by B (meq/g), relations of the following formulae (1') and (2') are satisfied:

$$0.8 \leq A/B \qquad (1')$$

$$0.5 \leq A \leq 6 \qquad (2').$$

**19.** A polymer electrolyte membrane comprising the polymer electrolyte according to any one of claims 1 to 15 and/or the crosslinked polymer electrolyte according to any one of claims 16 to 18.

**20.** A catalyst composition comprising the polymer electrolyte according to any one of claims 1 to 15 and/or the crosslinked polymer electrolyte according to any one of claims 16 to 18 and a catalyst material.

**21.** A membrane-electrode assembly comprising the polymer electrolyte membrane according to claim 19 and/or a catalyst layer obtained from the catalyst composition according to claim 20.

**22.** A fuel cell comprising a pair of separators and a membrane-electrode assembly disposed between the pair of separators, wherein the membrane-electrode assembly is a membrane-electrode assembly according to claim 21.

**INTERNATIONAL SEARCH REPORT**

International application No.
PCT/JP2009/060406

A. CLASSIFICATION OF SUBJECT MATTER
H01B1/06(2006.01)i, C08G61/12(2006.01)i, H01M4/86(2006.01)i, H01M8/02(2006.01)i, H01M8/10(2006.01)i

According to International Patent Classification (IPC) or to both national classification and IPC

B. FIELDS SEARCHED

Minimum documentation searched (classification system followed by classification symbols)
H01B1/06, C08G61/12, H01M4/86, H01M8/02, H01M8/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2005-174827 A (NEC Corp.), 30 June, 2005 (30.06.05), Full text (Family: none) | 1-5,16-22 |
| A | JP 2004-51978 A (Nippon Shokubai Co., Ltd.), 19 February, 2004 (19.02.04), Full text (Family: none) | 1-5,16-22 |

☐ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>20 August, 2009 (20.08.09) | Date of mailing of the international search report<br>01 September, 2009 (01.09.09) |
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.
PCT/JP2009/060406

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

As stated on extra sheet, there must exist a special technical feature so linking a group of inventions of claims as to form a single general inventive concept in order that the group of inventions may satisfy the requirement of unity of invention. The claims of this international application define at least two inventions, namely a group of inventions consisting of the invention of claim 1 and the inventions of claims 2-5 and 16-22 directly or indirectly dependent on the invention of claim 1, and a group of inventions consisting of the invention of claim 6 and the inventions of claims 7-22 directly or indirectly dependent on the invention of claim 6.

(Continued to extra sheet)

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.: 1-5, 16-22

**Remark on Protest** the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**INTERNATIONAL SEARCH REPORT**

International application No.
PCT/JP2009/060406

Continuation of Box No.III of continuation of first sheet(2)

There must exist a special technical feature so linking a group of inventions of claims as to form a single general inventive concept in order that the group of inventions may satisfy the requirement of unity of invention. The inventions of claims 1-22 are considered to be linked only by "a polymer electrolyte characterized by containing an ion exchange group in each molecule".

This technical feature, however, cannot be a special technical feature since it is disclosed in such prior art documents as follows.

Document 1: JP 2008-027903 A (Sumitomo Chemical Co., Ltd.) 7 February, 2008 (07.02.08), claim 1, claim 2 and claim 3; GB 900501 D; GB 2453082 A; WO 2007/148814 A1; DE 112007001464 T; and CA 2655785 A

Document 2: JP 2008-123878 A (Nippon Zeon Co., Ltd.), 29 May, 2008 (29.05.08), claim 1 (no patent family members)

Document 3: JP 2008-088420 A (Sumitomo Chemical Co., Ltd.), 17 April, 2008 (17.04.08), claim 1 and claim 13; and WO 2008/029937 A1

(Documents 1-3 disclose a polymer electrolyte containing an ion exchange group in each molecule.)

Consequently, there is no special technical feature so linking the group of inventions of claims 1-22 as to form a single general inventive concept. It is therefore obvious that the group of inventions of claims 1-22 does not satisfy the requirement of unity of invention.

Then, judging from the specific modes described in claims (claims 1 and 6), the claims of this international application are considered to define at least two inventions, namely a group of inventions consisting of the invention of claim 1 and the inventions of claims 2-5 and 16-22 directly or indirectly dependent on the invention of claim 1, and a group of inventions consisting of the invention of claim 6 and the inventions of claims 7-22 directly or indirectly dependent on the invention of claim 6.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000501223 T
- JP 2004319139 A


### Non-patent literature cited in the description


- **Nakahama Seiichi.** Essential Kobunshi Kagaku. Kodansha LTD, April 1988, 59-60
- Shin Jikken Kagaku Koza. Polymer Chemistry (II). Chemical Society of Japan, Maruzen, vol. 19, 992